# NEUE EUROPÄISCHE PATENTSCHRIFT

(11) **EP 1 504 975 B2**
(45) Veröffentlichungstag und Bekanntmachung des Hinweises auf die Entscheidung über den Einspruch: **02.10.2013**
(45) Hinweis auf die Patenterteilung: 21.03.2007
(21) Anmeldenummer: 04015854.5
(22) Anmeldetag: 06.07.2004
(51) Int. Cl.: B60T 13/68, B60T 7/10

(54) **Druckmittelbetriebene Bremsanlage für ein Fahrzeug**
Brake system for a vehicle using a pressure medium
Système de freinage pour un véhicule utilisant un moyen de pression

(30) Priorität: 08.08.2003 DE 10336611
(43) Veröffentlichungstag der Anmeldung: 09.02.2005
(60) Teilanmeldung: 07000160.7
(73) Patentinhaber: WABCO GmbH, 30453 Hannover (DE)
(72) Erfinder: Bensch, Uwe, 30161 Hannover (DE); Förster, Henning, 31171 Nordstemmen (DE); Kiel, Bernd, 31515 Wunstorf (DE); Menze, Wilfried, 31832 Springe (DE); Rosendahl, Hartmut, 30167 Hannover (DE); Struwe, Otmar, 30163 Hannover (DE)
(74) Vertreter: Wasiljeff, Johannes M.B.

(56) Entgegenhaltungen:
- EP-A- 0 580 382
- EP-A2- 1 366 964
- DE-A- 4 327 759
- DE-A- 19 857 393
- US-A- 5 370 449
- US-A1- 2003 006 644

## Beschreibung

Die Erfindung betrifft je eine druckmittelbetriebene Bremsanlage für ein Fahrzeug gemäß dem Oberbegriff des Patentanspruchs 1, 2 bzw. 3.

Gattungsgemäße Bremsanlagen sind aus der US 2003/0006644A1 bekannt.

Eine weitere bekannte Bremsanlage in der Ausführungsform einer Druckluftbremsanlage ist aus DE 198 57 393 A1 bekannt und weist eine Feststellbremsvorrichtung auf, bei der auf pneumatische Leitungen zu einem Feststellbrems-Betätigungselement, welches zur Betätigung der Feststellbremsvorrichtung durch den Fahrer des Fahrzeugs dient, verzichtet werden soll. Das Feststellbrems-Betätigungselement ist bei herkömmlichen Druckluft-Bremsanlagen als pneumatisches, handbetätigbares Ventil ausgebildet. Bei der in der DE 198 57 393 A1 vorgeschlagenen Feststellbremsvorrichtung erfolgt die Signalübertragung zur Aktivierung der Feststellbremse auf elektrischem Weg, was die Anordnung von Pneumatikleitungen im Fahrerhaus überflüssig macht.

Zur Realisierung der Feststellbrems-Funktion sind dort eine Mehrzahl von konventionellen Elektromagnetventilen vorgesehen, über die die Bremszylinder bzw. die Federspeicherzylinder der Fahrzeugbremsanlage mit Druckluft beaufschlagt werden können. Eine solche Anordnung einer Reihe von zusätzlichen Ventilen in einer Druckluftbremsanlage eines Fahrzeuges führt zu einem erhöhten Fertigungs- und Montageaufwand bei der Installation der Bremsanlage in dem Fahrzeug sowie zu höheren Kosten. Außerdem erhöhen derartige zusätzliche, über Druckluftleitungen angeschlossene Komponenten das Ausfallrisiko der Bremsanlage.

Der Erfindung liegt daher die Aufgabe zugrunde, eine druckmittelbetriebene Bremsanlage für ein Fahrzeug anzugeben, bei der eine über einen elektrischen Signalgeber betätigbare Feststellbrems-Funktion unter Einhaltung der einschlägigen Sicherheitsbestimmungen für Bremsanlagen mit geringem Aufwand integrierbar ist.

Diese Aufgabe wird durch die in den Patentansprüchen 1, 2 und 3 angegebene Erfindung gelöst. Weiterbildungen und vorteilhafte Ausgestaltungen der Erfindung sind in den Unteransprüchen angegeben.

Die Erfindung hat den Vorteil, daß durch Verwendung eines einzigen, für die Feststellbrems-Funktion zuständigen Bauteils, nämlich eines Feststellbrems-Moduls, eine Integration der Feststellbrems-Funktion, welche über einen elektrischen Signalgeber betätigt wird, sehr einfachen mit wenig Montage- und Kostenaufwand möglich ist. Vorteilhafterweise sind in das Feststellbrems-Modul bereits die erforderlichen Ventile zur Steuerung von Druckmittelströmen in Form einer elektrisch betätigbaren Ventileinrichtung sowie eine elektronische Steuereinrichtung zur Ansteuerung dieser Ventileinrichtung integriert. Infolge der Ausführung der Erfindung als kompaktes Feststellbrems-Modul ergibt sich eine einfache Integrierbarkeit insbesondere in bekannte Druckluftbremsanlagen, ohne daß ein zusätzlicher Aufwand für die Einhaltung der einschlägigen Sicherheitsbestimmungen im Vergleich zu bekannten Druckluftbremsanlagen mit rein pneumatischer Feststellbrems-Funktion erforderlich wäre.

Ein weiterer Vorteil der Erfindung besteht darin, daß das Feststellbrems-Modul nicht nur in elektrisch gesteuerte Bremsanlagen (EBS-Bremsanlagen) auf einfache Weise integrierbar ist, sondern auf ebenso einfache Weise auch in konventionelle Druckluftbremsanlagen mit oder ohne Antiblockiersystem (ABS) integrierbar ist.

Gemäß einem Aspekt der Erfindung weist die elektrisch betätigbare Ventileinrichtung ein Bistabil-Ventil mit einer bistabilen Schaltfunktion mit zwei Schaltzuständen auf, wobei in einem ersten Schaltzustand ein Druckmittel zu dem die Radbremse betätigenden Aktuator zuführbar und in einem zweiten Schaltzustand Druckmittel von dem Aktuator abführbar ist. Die Verwendung eines solchen Bistabil-Ventils hat den Vorteil, daß bei einem Ausfall oder einer Störung der fahrzeugseitigen Spannungsversorgung das Bistabil-Ventil seinen zuletzt eingestellten Schaltzustand beibehält. Dies hat gegenüber Ventilkonzepten, die eine bevorzugte Ruhestellung bei Ausfall der elektrischen Energie haben, den Vorteil, daß die einschlägigen gesetzlichen Bestimmungen erfüllbar sind, gemäß denen bei Ausfall oder einer Störung der fahrzeugseitigen Spannungsversorgung die Feststellbremse ihren zuletzt eingestellten Zustand beizubehalten hat. Die bekannten Ventilkonzepte dagegen erlauben nur eine einheitliche konstruktiv bedingte Ruhestellung, wenn keine ausreichende Spannungsversorgung zur Verfügung steht.

Gemäß einer vorteilhaften Weiterbildung der Erfindung ist an oder in dem Feststellbrems-Modul ein elektrischer Energiespeicher vorgesehen, welcher zur zumindest teilweisen Aufrechterhaltung der Feststellbrems-Funktion bei einem Ausfall oder einer Störung der fahrzeugseitigen Spannungsversorgung dient. Dies hat den Vorteil, daß auch bei einem Ausfall oder einer Störung der fahrzeugseitigen Spannungsversorgung noch bestimmte eingeschränkte Funktionalitäten der Feststellbrems-Funktion aktivierbar sind, wie in den Ausführungsbeispielen noch näher erläutert wird.

Die Erfindung wird nachfolgend anhand von Ausführungsbeispielen unter Verwendung von Zeichnungen sowie unter Nennung weiterer Vorteile näher beschrieben.

Es zeigen
- Fig. 1: eine Druckluftbremsanlage in schematischer Darstellung und
- Fig. 2: ein in der Druckluftbremsanlage gemäß Fig. 1 vorgesehenes Feststellbrems-Modul und
- Fig. 3: ein in der Druckluftbremsanlage gemäß Fig. 1 vorgesehener Feststellbrems-Signalgeber und
- Fig. 4, 5: eine Ausführungsform des Feststellbrems-Signalgebers als Proportionalbrems-Signalgeber und
- Fig. 6: eine Signal-Kennlinie des Proportionalbrems-Signalgeber und
- Fig. 7: eine weitere Ausgestaltung einer Druckluftbremsanlage in schematischer Darstellung und
- Fig. 8: eine weitere Ausgestaltung des Feststellbrems-Moduls und
- Fig. 9: eine weitere Ausgestaltung eines Bistabil-Ventils.

In den Figuren werden gleiche Bezugszeichen für einander entsprechende Teile verwendet.

Nachfolgend wird der Einsatz des erfindungsgemäßen Feststellbrems-Moduls am Beispiel einer elektrisch gesteuerten Bremsanlage erläutert. Selbstverständlich kann das Feststellbrems-Modul in analoger Weise in einer konventionellen, d. h. nicht elektrisch gesteuerten, Druckluftbremsanlage eingesetzt werden.

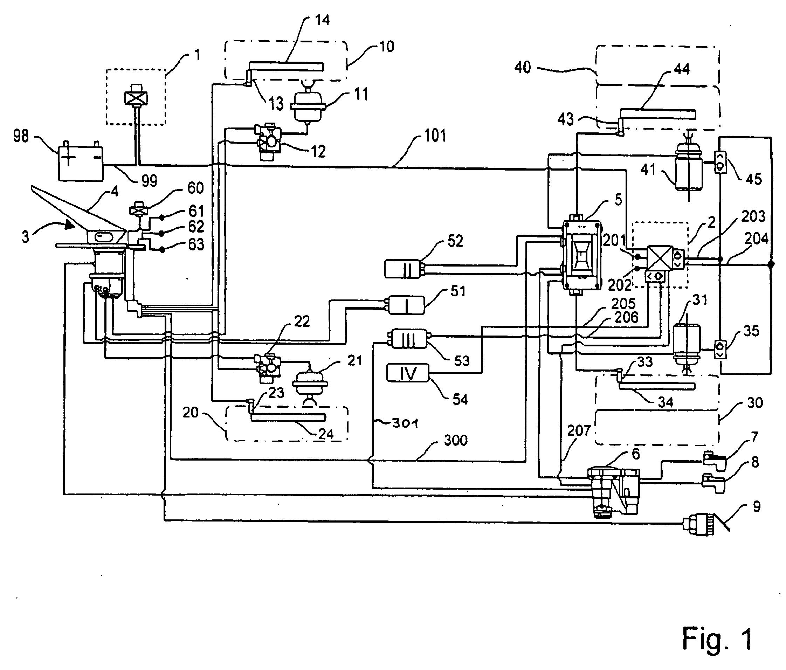

In der Fig. 1 ist eine Druckluft-Bremsanlage für ein vierrädriges Fahrzeug schematisch dargestellt. Bei der dargestellten Bremsanlage handelt es sich um einen elektrisch gesteuerten Typ, d. h. die Bremsdruckzumessung der einzelnen Radbremsen wird durch elektrische und elektronische Steuerelemente gesteuert.

Das Fahrzeug gemäß Fig. 1 weist vier Räder (10, 20, 30, 40) auf, die zur individuellen Abbremsung jeweils mit einer Radbremse versehen sind. Die Räder (10, 20), nachfolgend auch als Vorderräder bezeichnet, sind der Vorderachse des Fahrzeuges zugeordnet. Die Räder (30, 40) , nachfolgend auch als Hinterräder bezeichnet, sind der Hinterachse des Fahrzeuges zugeordnet. Von den Radbremsen sind zur vereinfachten Darstellung in der Fig. 1 nur die jeweiligen Druckluft-Bremszylinder (11, 21, 31, 41) dargestellt. Den Bremszylindern (11, 21, 31, 41) sind jeweils elektromagnetisch betätigbare Ventile zur Beeinflussung des Bremsdrucks vorgeschaltet. Im Falle der Vorderräder (10, 20) werden hierfür die Ventile (12, 22) verwendet. Für die Hinterräder (30, 40) sind die jeweiligen Ventile in ein Hinterachs-Bremssteuermodul (5) integriert.

Des weiteren sind an den Rädern (10, 20, 30, 40) jeweils Geschwindigkeits-Sensiermittel angeordnet, welche eine Ermittlung der jeweiligen Raddrehgeschwindigkeit erlauben. Die Geschwindigkeits-Sensiermittel bestehen jeweils aus einem mit dem Rad (10, 20, 30, 40) drehfest verbundenen Polrad (14, 24, 34, 44), welches mit einem induktiv arbeitenden Rad-Sensor (13, 23, 33, 43) elektromagnetisch gekoppelt ist.

Die Rad-Sensoren (13, 23) sowie die Ventile (12, 22) der Vorderräder (10, 20) sind über elektrische Leitungen mit einem Vorderachs-Bremssteuermodul (3) verbunden. Die Ventile (12, 22) sind außerdem über Druckluftleitungen mit dem Vorderachs-Bremssteuermodul (3) verbunden. Das Vorderachs-Bremssteuermodul (3) dient zur Steuerung der Radbremsen der Vorderräder (10, 20), konkreter gesagt zur Bremsdruckzumessung für die Bremszylinder (11, 21), in Abhängigkeit von einer Bremsbetätigung des Fahrers des Fahrzeuges sowie weiterer Betriebsbedingungen des Fahrzeuges, wie etwa Bremsschlupf oder Bremsbelagverschleiß. Zur Zuführung der dafür benötigten Druckluft ist das Vorderachs-Bremssteuermodul (3) mit einem ersten Druckluftvorratsbehälter (51) über aus Sicherheitsgründen doppelt ausgeführte Druckluftleitungen verbunden.

Das Vorderachs-Bremssteuermodul (3) weist außerdem einen Bremswertgeber zur Erfassung des Bremswunsches des Fahrers des Fahrzeuges auf. Der Bremswertgeber umfaßt einen elektrischen Sensor, der eine mechanische Betätigung eines Bremspedals (4) erfaßt und ein diese Betätigung repräsentierendes Signal an eine in dem Vorderachs-Bremssteuermodul (3) angeordnete elektronische Steuereinrichtung abgibt. Die elektronische Steuereinrichtung bestimmt unter Auswertung dieser empfangenen Signale sowie unter Berücksichtigung von weiteren, z. B. aus den Signalen der Rad-Sensoren (13, 23, 33, 43) abgeleiteten Größen, wie Blockiergefahr, Bremsbelagverschleiß, achslast-abhängiger Bremskraftverteilung, den in den Bremszylindern (11, 21) einzustellenden Bremsdruck und bewirkt die Einstellung des Bremsdrucks durch Betätigung der Ventile (12, 22).

Das Vorderachs-Bremssteuermodul (3) weist zudem als manuelles Bedienelement einen Rollbrems-Signalgeber (60), einen Stromversorgungsanschluß (61), eine Datenschnittstellen-Anschluß (62) sowie einen Serviceanschluß (63) auf.

Das Hinterachs-Bremssteuermodul (5) weist einen ähnlichen Aufbau wie das Vorderachs-Bremssteuermodul (3) auf, jedoch ohne Bremswertgeber und Bremspedal. Das Hinterachs-Bremssteuermodul (5) ist über aus Sicherheitsgründen doppelt ausgeführte pneumatische Leitungen mit einem zweiten Druckluftvorratsbehälter (52) verbunden. Das Hinterachs-Bremssteuermodul (5) weist ebenfalls eine Datenschnittstelle auf, die über eine elektrische Leitung (300) mit der Datenschnittstelle des Vorderachs-Bremssteuermoduls (3) verbunden ist. Über die Datenschnittstellen tauschen die Module (3, 5) Daten aus. So empfängt das Hinterachs-Bremssteuermodul (5) von dem Vorderachs-Bremssteuermoduls (3) beispielsweise den mittels des Bremswertgebers erfaßten Bremswunsch des Fahrers und steuert analog wie das Vorderachs-Bremssteuermodul (3) den Bremsdruck in den Bremszylindern (31, 41) der Hinterräder (30, 40) über in dem Hinterachs-Bremssteuermodul (5) angeordnete Ventile gemäß vorgegebenen Algorithmen. Die hierfür erforderliche Druckluft entnimmt das Hinterachs-Bremssteuermodul (5) dem zweiten Druckluftvorratsbehälter (52).

Die Bremszylinder (31, 41) sind als kombinierte Federspeicher-/Membranzylinder ausgebildet. Das bedeutet, daß die Bremszylinder (31, 41) neben der Funktion von Membranzylindern, wie etwa der Bremszylinder (11, 21), zusätzlich eine Federspeicherfunktion aufweisen. Die Bremszylinder (31, 41) bestehen aus einem Membranteil, welcher pneumatisch mit der Betriebsbremsanlage der Hinterachse verbunden ist und mit dem eigentlichen Bremsdruck beaufschlagbar ist, sowie aus einem Federspeicherteil, welcher pneumatisch von dem Membranteil getrennt ist und über gesonderte Druckluftleitungen mit Druckluft beaufschlagbar ist. Der Federspeicherteil wird üblicherweise der Feststellbremsanlage des Fahrzeuges zugerechnet. Der Federspeicherteil beinhaltet die Federspeicherfunktion, welche bei Druckluftbeaufschlagung des Federspeicherteils eine Speicherfeder vorspannt und dabei eine Bremswirkung der Federspeicherfunktion verringert, während bei Entlüftung des Federspeicherteils die Speicherfeder sich entspannt und dabei eine Bremswirkung im Rahmen der Federspeicherfunktion auf die mit dem jeweiligen Bremszylinder verbundene Bremse ausübt. Bremszylinder dieses Typs werden nachfolgend auch als Federspeicher-Bremszylinder bezeichnet.

Mittels solcher Federspeicher-Bremszylinder ist eine Feststellbrems-Funktion möglich, die auch bei Fehlen von Druckluft eine Bremsung bzw. ein Feststellen des Fahrzeuges ermöglicht. Diese Feststellbrems-Funktion tritt, wie erwähnt, bei einem Entlüften des Federspeicherteils des Bremszylinders (31, 41) unterhalb eines Mindestdruckwerts auf. Zur separaten, von der Betätigung des Bremspedals (4) unabhängigen Aktivierung der Feststellbrems-Funktion ist der Druckluftanschluß des Federspeicherteils bei bekannten Druckluft-Bremsanlagen mit einem pneumatischen Handbremsventil verbunden.

Im Unterschied hierzu ist an die erwähnten Druckluftanschlüsse des Federspeicherteils der Bremszylinder (31, 41) über Wechselventile (35, 45) und aus Sicherheitsgründen doppelt ausgelegte Druckluftleitungen (203, 204) ein Feststellbrems-Modul (2) angeschlossen, welches eine Drucksteuerung an diesen weiteren Druckluftanschlüssen mit Hilfe elektronischer Steuerungsmittel erlaubt. Die aus Sicherheitsgründen doppelt ausgelegten Druckluftleitungen (203, 204) erlauben im Zusammenhang mit den Wechselventilen (35, 45) sowie einem ausgangsseitig des Feststellbrems-Moduls (2) angeordneten weiteren Wechselventils im Falle einer Leckage an einer der Druckluftleitungen (203, 204) eine Aufrechterhaltung der Druckluftsteuerung über die verbleibende Druckluftleitung. Die Wechselventile sperren dabei automatisch die den geringeren Druck aufweisende Druckluftleitung (203, 204) ab.

Eine solche doppelte Auslegung von Druckluftleitungen wird auch als Rohrbruchsicherung bezeichnet. Eine derartige Rohrbruchsicherung wird in der Praxis bisher vorwiegend in Fahrzeugen zur Personenbeförderung, z. B. Bussen, zur Erfüllung hoher Sicherheitsanforderungen und entsprechender gesetzlicher Vorschriften eingesetzt. Die Rohrbruchsicherung stellt eine optionale Erweiterung des Feststellbrems-Moduls (2) dar und kann, je nach Bedarf und nach nationaler gesetzlicher Vorschriftenlage, auch entfallen.

Das Feststellbrems-Modul (2) ist über eine mehradrige elektrische Leitung (101) mit einem manuellen Bedienelement, dem Feststellbrems-Signalgeber (1), verbunden. Der Feststellbrems-Signalgeber (1) wird von einer Stromversorgungseinrichtung (98), z. B. einer Fahrzeugbatterie, über eine mehradrige elektrische Leitung (99) mit elektrischer Energie versorgt. Des weiteren ist das Feststellbrems-Modul (2) zur Druckluftversorgung über eine Druckluftleitung (206) mit einem dritten Druckluftvorratsbehälter (53) sowie über eine Druckluftleitung (205) mit einem vierten Druckluftvorratsbehälter (54) verbunden. Die zwei separaten Druckluftleitungen (205, 206) zur Druckluftversorgung des Feststellbrems-Moduls (2) kommen ebenfalls aus Sicherheitsgründen zur Anwendung. Des weiteren weist das Feststellbrems-Modul (2) Anschlüsse (201, 202) für die Spannungsversorgung und die Datenschnittstelle auf. Der Anschluß (201) für die Datenschnittstelle dient zur Verbindung mit einem in dem Fahrzeug vorgesehenen Datenbus-System, welches auch als Fahrzeugbus bezeichnet wird. Der Fahrzeugbus dient zum Datenaustausch zwischen verschiedenen in dem Fahrzeug vorgesehenen, eine elektronische Steuerung enthaltenden Geräten, wie z. B. den Moduln (3, 5). Hierfür sind die Module (3, 5) über jeweilige Datenschnittstellen-Anschlüsse mit dem Fahrzeugbus verbunden.

Das bisher beschriebene Fahrzeug ist außerdem zur Ankopplung eines Anhängefahrzeuges geeignet. In diesem Zusammenhang wird das bisher beschriebene Fahrzeug auch als Zugfahrzeug und die Einheit aus Zugfahrzeug und Anhängefahrzeug auch als Fahrzeugzug bezeichnet.

Die Bremsanlage gemäß Fig. 1 enthält außerdem ein Anhängersteuerventil (6), welches zur Bremsdrucksteuerung eines ankoppelbaren Anhängefahrzeuges dient. Das Anhängersteuerventil (6) ist zur Druckluftversorgung über eine Druckluftleitung (301) mit dem dritten Druckluftvorratsbehälter (53) verbunden. Das Anhängersteuerventil (6) gibt die von dem Druckluftvorratsbehälter (53) bezogene Druckluft nach Maßgabe von elektrischen und pneumatischen Steuersignalen gestuft über Druckluftanschlüsse (7, 8) an die Bremsanlage eines angekoppelten Anhängefahrzeuges ab. Zur Steuerung dieser Druckabgabe weist das Anhängersteuerventil (6) einen elektrischen Signaleingang auf, der mit dem Vorderachs-Bremssteuermodul (3) verbunden ist und über den das Anhängersteuerventil (6) ein elektrisches Signal, z. B. ein pulsbreitenmoduliertes Signal, empfängt, das den Bremswunsch des Fahrers repräsentiert. Alternativ kann der elektrische Signaleingang auch an das Hinterachs-Bremssteuermodul (5) angeschlossen sein. Zusätzlich zu dem elektrischen Signaleingang sind ein erster und ein zweiter Drucksteuereingang zum Empfang von pneumatischen Steuersignalen vorgesehen. Der erste Drucksteuereingang ist mit einem Anhänger-Steuerausgang eines als Redundanz vorgesehenen pneumatischen Drucksteuerkreises des Vorderachs-Bremssteuermoduls (3) verbunden. Der zweite Drucksteuereingang ist über eine Druckluftleitung (207) mit dem Feststellbrems-Modul (2) verbunden.

Des weiteren ist noch ein elektrischer Steckanschluß (9) zur Stromversorgung und zur Übermittlung von Datensignalen für das Anhängefahrzeug vorgesehen.

Die Druckluftvorratsbehälter (51, 52, 53, 54) sind über eine nicht dargestellte Druckluftversorgungsanlage, z. B. einen von dem Fahrzeugmotor angetriebenen Kompressor, mit Druckluft befüllbar.

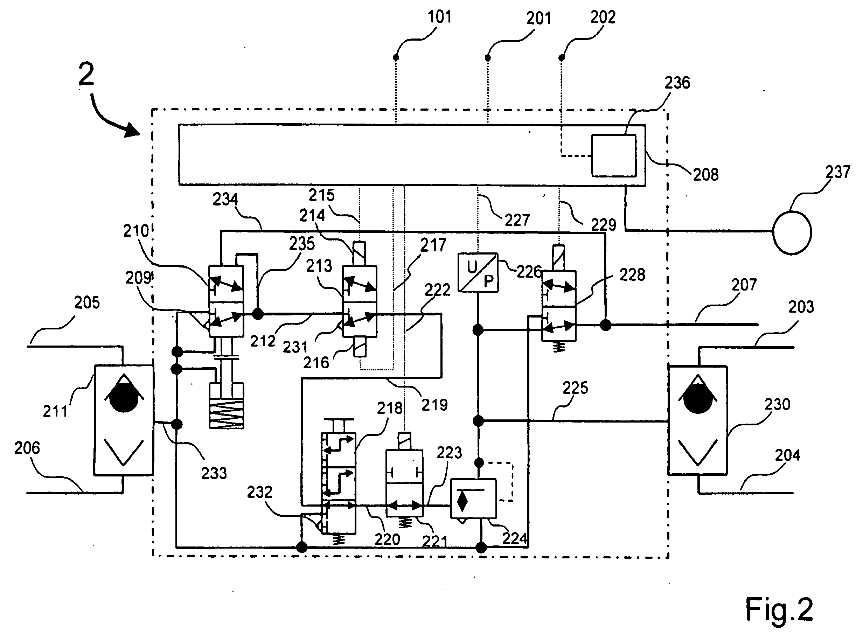

In der Fig. 2 ist der Aufbau des Feststellbrems-Moduls (2) in schematischer Form detailliert dargestellt. Das Feststellbrems-Modul (2) wird über die Druckluftleitungen (205, 206) von den Druckluftvorratsbehältern (53, 54) mit Druckluft versorgt. Die Druckluftleitungen (205, 206) münden in ein Wechselventil (211), dessen Ausgang über eine Druckluft-Zufuhrleitung (233) unter anderem mit einem Standsicherheitsventil (210) verbunden ist. Das Standsicherheitsventil (210) stellt eine optionale Erweiterung des Feststellbrems-Moduls (2) dar und kann, je nach Bedarf und nach nationaler gesetzlicher Vorschriftenlage, auch entfallen.

Das Standsicherheitsventil (210) dient dazu, ein unerwünschtes Wegrollen des Fahrzeuges zu verhindern, was auftreten könnte, wenn das Fahrzeug ohne Betätigung der Feststellbrems-Funktion mit zunächst eingelegtem Gang abgestellt wird. In diesem Fall verhindert der eingelegte Gang über den Antriebsstrang in der Regel bereits ein Wegrollen des Fahrzeuges. Je nach der Dauer einer Nichtbenutzung des Fahrzeuges kann es infolge von Druckluftverlust in der Druckluftanlage passieren, daß die Feststellbrems-Funktion automatisch infolge der Federspeicher-Bremsfunktion der Bremszylinder (31, 41) aktiviert wird, ohne daß beispielsweise der Fahrer eine solche Betätigung der Feststellbrems-Funktion bewußt durchgeführt hätte. Bei einem späteren Starten des Fahrzeugmotors, was in der Regel ohne eingelegten Gang erfolgt, kann es in einem solchen Fall passieren, daß infolge einer Druckluft-Befüllung der Druckluftvorratsbehälter (51, 52 53, 54) durch die Druckluftversorgungsanlage ein ausreichender Vorratsdruck in der Druckluftanlage entsteht, welcher ein Lösen der Federspeicher-Bremsfunktion in den Bremszylindern (31, 41) bewirkt. In einem solchen Fall wäre das Fahrzeug ohne geeignete Gegenmaßnahmen vollständig ungebremst, so daß es sich bei entsprechender Fahrbahnneigung in Bewegung setzen könnte. Ein derartiges Wegrollen des Fahrzeuges kann gefährlich sein und ist daher in der Regel unerwünscht. Das unerwünschte Wegrollen des Fahrzeuges wird durch das Standsicherheitsventil (210) verhindert, wie nachfolgend noch im Zusammenhang mit den weiteren Komponenten gemäß Fig. 2 erläutert wird.

Das Standsicherheitsventil (210) ist ausgangsseitig über eine Druckluftleitung (212) mit einem Bistabil-Ventil (213) verbunden. Das im Ausführungsbeispiel als druckluftbetätigbares 3/2-Wegeventil ausgebildete Standsicherheitsventil (210) wird über eine Druckluftleitung (235) mit seinem ausgangsseitigen Druck sowie über eine Druckluftleitung (234) mit dem an das Anhängersteuerventil (6) über die Druckluftleitung (207) abgegebenen Druck beaufschlagt. Das Standsicherheitsventil verbindet in einer ersten, in der Fig. 2 dargestellten Schaltstellung, die auch als Sicherheitsstellung bezeichnet wird und die bei Unterschreitung eines Mindestdrucks in den Druckluftleitungen (234, 235) infolge Federkraft eingenommen wird, die Druckluftleitung (212) mit einem mit der Atmosphäre verbundenen Entlüftungsanschluß (209). In seiner zweiten Schaltstellung, die auch als Arbeitsstellung bezeichnet wird, verbindet das Standsicherheitsventil (210) die eingangsseitige Druckluft-Zufuhrleitung (233) mit der ausgangsseitigen Druckluftleitung (212). In der Sicherheitsstellung bewirkt das Standsicherheitsventil (210) eine Entlüftung der Bremszylinder (31, 41) und damit eine Aktivierung der Federspeicher-Bremsfunktion.

Das an die Druckluftleitung (212) angeschlossene Bistabil-Ventil (213) ist als elektromagnetisch betätigbares 3/-2-Wegeventil ausgebildet. Es weist eine erste Schaltstellung, nachfolgend Entlüftungsstellung genannt, auf, wie in der Fig. 2 dargestellt, in welcher ein ausgangsseitiger, mit einer Druckluftleitung (219) verbundener Anschluß mit einem mit der Atmosphäre verbundenen Entlüftungsanschluß (231) verbunden ist. In einer zweiten Schaltstellung, nachfolgend Druckzufuhrstellung genannt, verbindet das Bistabil-Ventil (213) die Druckluftleitung (212) mit der Druckluftleitung (219).

Der prinzipielle Aufbau derartiger Bistabil-Ventile ist beispielsweise aus der WO 00/23740 A1 bekannt.

Das Bistabil-Ventil (213) hat die besondere Eigenschaft, im unbestromten Fall, d. h. wenn keine elektrische Spannung anliegt, keine bevorzugte Schaltstellung aufzuweisen, wie etwa bekannte, mit einer Rückstellfeder versehene Magnetventile, welche bei unbestromtem Elektromagneten durch die Kraft der Rückstellfeder in eine vorgewählte Schaltstellung gebracht werden. Bei der in der Fig. 2 dargestellten Ausführungsform des Bistabil-Ventils (213) ist ein erster Elektromagnet (214) vorgesehen, durch dessen Betätigung das Bistabil-Ventil (213) in seine zweite Schaltstellung gebracht werden kann. Weiterhin ist ein zweiter Elektromagnet (216) vorgesehen, durch den das Bistabil-Ventil (213) in seine erste Schaltstellung gebracht werden kann. Die Elektromagneten (214, 216) werden zur Vermeidung undefinierter Zustände nicht gleichzeitig betätigt. Die Elektromagneten (214, 216) sind über elektrische Leitungen (215, 217) mit einer elektronischen Steuereinrichtung (208) verbunden. In einer weiteren Ausführungsform weist das Bistabil-Ventil zur Betätigung lediglich einen Elektromagneten auf, wobei die Umschaltung zwischen den beiden Schaltstellungen dann durch Umpolung der elektrischen Spannung an dem Elektromagneten seitens der elektronischen Steuereinrichtung (208) erfolgt.

Ausgangsseitig des Bistabil-Ventils (213) ist an die Druckluftleitung (219) ein manuell betätigbares 4/3-Wegeventil (218), nachfolgend Handbetätigungsventil genannt, angeschlossen. Das Handbetätigungsventil (218) kann durch manuelle Betätigung einer Handhabe in eine von drei Schaltstellungen gestellt werden. In einer ersten Schaltstellung erfolgt ein Durchlassen des Drucks in der Druckluft-Zufuhrleitung (233) zu einer ausgangsseitig mit dem Handbetätigungsventil (218) verbundenen Druckluftleitung (220). Diese erste Schaltstellung dient zum manuellen Beaufschlagen des Federspeicherteils der Bremszylinder (31, 41) mit Druckluft zum Zwecke des Lösens der Feststellbrems-Funktion. In einer zweiten Schaltstellung stellt das Handbetätigungsventil (218) eine Verbindung der Druckluftleitung (220) zu einem mit der Atmosphäre verbundenen Entlüftungsanschluß (232) her. Diese zweite Schaltstellung dient zum manuellen Entlüften des Federspeicherteils der Bremszylinder (31, 41) zum Zwecke des Einlegens der Feststellbrems-Funktion. In seiner dritten, in der Fig. 2 dargestellten Schaltstellung verhält sich das Handbetätigungsventil (218) neutral, d. h. es erlaubt einen Druckluft-Durchfluß zwischen den Druckluftleitungen (219, 220) in beiden Richtungen.

Das Handbetätigungsventil (218) soll bei Störungen in der elektrischen Steuerung des Feststellbrems-Moduls (2) ein manuelles Einlegen und Lösen der Feststellbrems-Funktion gewährleisten. Im störungsfreien Normalbetrieb des Feststellbrems-Moduls (2) ist das Handbetätigungsventil (218) daher immer in seine dritte Schaltstellung eingestellt. Das Handbetätigungsventil (218) stellt eine optionale Erweiterung des Feststellbrems-Moduls (2) dar und kann, je nach Bedarf und nach nationaler gesetzlicher Vorschriftenlage, auch entfallen.

An das Ventil (218) ist über die Druckluftleitung (220) ein Ventil (221) angeschlossen. Das Ventil (221) ist über eine mit der elektronischen Steuereinrichtung (208) verbundene elektrische Leitung (222) elektromagnetisch betätigbar. Das Ventil (221) erlaubt in seiner in der Fig. 2 dargestellten Schaltstellung ein Durchströmen von Druckluft zwischen der Druckluftleitung (220) und einer ausgangsseitigen Druckluftleitung (223) in beiden Strömungsrichtungen. In der zweiten Schaltstellung sperrt das Ventil (221) die Druckluftströmung ab. Zur Erzielung eines dosierten Durchströmens von Druckluft kann das Ventil (221) z. B. mit einem getakteten Signal von der elektronischen Steuereinrichtung (208) angesteuert werden.

Gemäß einer vorteilhaften Weiterbildung der Erfindung ist das Ventil (221) als Proportionalventil ausgebildet, d.h. es sind durch Ansteuerung des Elektromagneten mit geeigneten elektrischen Signalen, z. B. mit einem getakteten Signal, proportionale oder zumindest quasiproportionale Durchlaßquerschnitte zwischen den Extremwerten Durchlaßstellung und Absperrstellung einstellbar. Das Proportionalventil (221) dient einer besonders fein dosierten Be- und Entlüftung eines über die Druckluftleitung (223) nachgeschalteten Relaisventils (224). Das Relaisventil (224) gibt einen Ausgangsdruck in eine Druckluftleitung (225) ab, der dem über die Druckluftleitung (223) in eine Steuerkammer des Relaisventils (224) eingesteuerten Druck entspricht, wobei das Relaisventil (224) die hierfür benötigte Druckluft aus einer mit der Druckluft-Zufuhrleitung (233) verbundenen Druckluftleitung entnimmt.

Mit der ausgangsseitig des Relaisventils (224) angeordneten Druckluftleitung (225) ist ein optionaler Drucksensor (226) verbunden, welcher ein dem Druck in der Druckluftleitung (225) entsprechendes elektrisches Signal über eine elektrische Leitung (227) an die elektronische Steuereinrichtung (208) abgibt und dort als Istdruckwert ausgewertet wird.

Zwecks Rohrbruchsicherung ist die Druckluftleitung (225) über ein Wechselventil (230) mit den zu den Bremszylindern (31, 41) führenden Druckluftleitungen (203, 204) verbunden. Des weiteren ist die Druckluftleitung (225) mit einem 3/2-Wegeventil (228) verbunden.

Das 3/2-Wegeventil (228) dient als Anhängerkontrollventil, d. h. mittels dieses Ventils kann eine sogenannte Anhängerkontroll-Funktion aktiviert werden. Als Anhängerkontroll-Funktion wird ein Zustand der Bremsanlage bezeichnet, bei dem bei an sich eingelegter Feststellbrems-Funktion die Bremsen eines mit dem Zugfahrzeug verbundenen Anhängefahrzeuges gelöst werden, um dem Fahrer des Zugfahrzeuges eine Möglichkeit zu geben, zu überprüfen, ob bei abgestelltem Fahrzeugzug die Bremswirkung der Feststellbremse des Zugfahrzeugs alleine ausreicht, um den gesamten Fahrzeugzug am Wegrollen zu hindern. Eine derartige Überprüfung ist insbesondere bei Anhängefahrzeugen erforderlich, bei denen etwa infolge von schleichendem Druckverlust bei längerfristigem Abstellen des Fahrzeugzuges sich die Bremsen des Anhängefahrzeugs lösen könnten. Auch in diesem Fall muß sichergestellt sein, daß der Fahrzeugzug nicht wegrollt, was demzufolge von der Feststellbremse des Zugfahrzeugs bewirkt werden muß.

Das Anhängerkontrollventil (228) ist als elektromagnetisch betätigbares 3/2-Wegeventil ausgeführt, das zur Betätigung über eine elektrische Leitung (229) mit der elektronischen Steuereinrichtung (208) verbunden ist. In einer ersten, in der Fig. 2 dargestellten Schaltstellung verbindet das Anhängerkontrollventil (228) die zu dem Anhängersteuerventil (6) führende Druckluftleitung (207) mit der Druckluftleitung (225). In seiner zweiten Schaltstellung verbindet das Anhängerkontrollventil (228) die Druckluftleitung (207) mit der Druckluft-Zufuhrleitung (233) und damit mit dem Druckluftvorrat. In dieser zweiten Schaltstellung ist die Anhängerkontroll-Funktion aktiviert. Hierbei wird der mit der Druckluftleitung (207) verbundene dritte Drucksteuereingang des Anhängersteuerventils (6) mit Vorratsdruck beaufschlagt, was aufgrund einer invertierenden Funktion des Anhängersteuerventils (6) ein Lösen der Bremsen des Anhängefahrzeuges bewirkt.

In Verbindung mit dem Standsicherheitsventil (210) erfüllt das Anhängerkontrollventil (228) eine weitere Funktion, nämlich ein Zurückstellen des Standsicherheitsventils (210) von der in der Fig. 2 dargestellten Sicherheitsstellung in die Arbeitsstellung. Hierfür beaufschlagt das Anhängerkontrollventil (228) beim Aktivieren der Anhängerkontroll-Funktion den einen Druckluft-Steuereingang des Standsicherheitsventils (210) über die Druckluftleitung (234). Zum Zwecke des Zurückstellens des Standsicherheitsventils (210) reicht eine relativ kurze Betätigung des Anhängerkontrollventils (228) durch die elektronische Steuereinrichtung (208) aus, so daß hierdurch nicht zwangsläufig die Anhängerkontroll-Funktion vollständig aktiviert wird, derart, daß eine eventuell vorliegende Bremsung des Anhängefahrzeuges infolge der kurzen Betätigung nicht aufgehoben wird.

In einer vorteilhaften Ausgestaltung der Erfindung besteht das Feststellbrems-Modul (2) aus einem Elektronikmodul sowie einem Ventilmodul, in welches die Ventile (210, 213, 218, 221, 224, 228) baulich integriert sind. Das Ventilmodul weist einen ersten Druckluftanschluß auf, in den die Druckluft-Zufuhrleitung (233) mündet, sowie einen zweiten Druckluftanschluß, in den die Druckabgabeleitung (225) mündet. Das Wechselventil (211) wird dabei direkt ohne weitere Druckluftleitungen an den ersten Druckluftanschluß geschraubt, das Wechselventil (230) wird direkt an den zweiten Druckluftanschluß geschraubt. Die Wechselventile (211, 230) sind ebenfalls optional im Zusammenhang mit der Rohrbruchsicherung vorgesehen.

Dies hat den Vorteil, daß keine zusätzliche Verrohrung bzw. Druckluftleitungen für den Anschluß der Wechselventile (211, 230) erforderlich sind. Hierdurch ist die Montage des Feststellbrems-Moduls (2) in dem Fahrzeug relativ einfach und wenig zeitraubend. Ein weiterer Vorteil ist, daß das Feststellbrems-Modul (2) in einfacher Weise, z. B. durch Weglassen von einem der Wechselventile oder durch Verwendung andersgearteter Wechselventile, mit wenig Aufwand in andersgearteten Bremsanlagen einsetzbar ist, insbesondere in solchen Bremsanlagen, bei denen keine doppelte Auslegung der Druckluftleitungen vorgesehen ist.

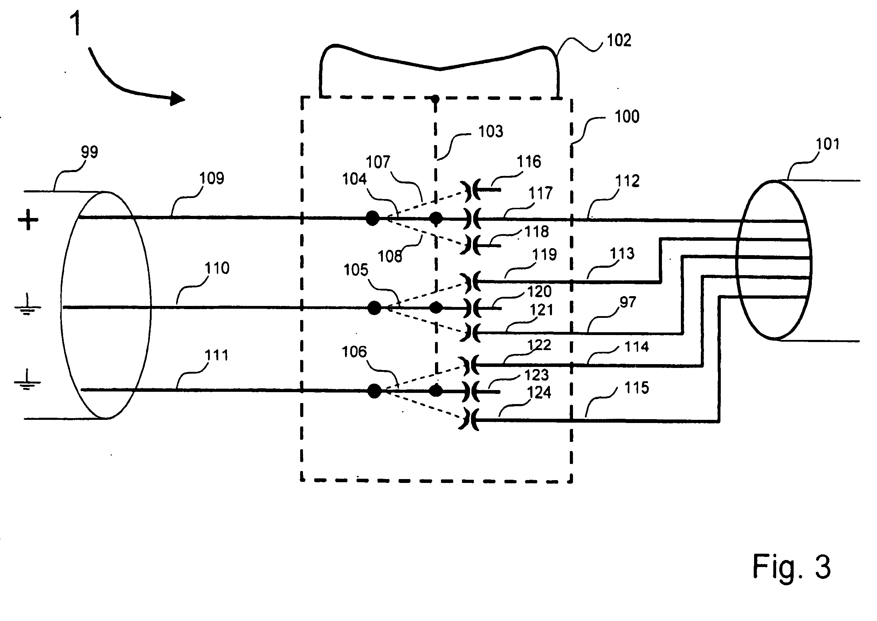

In der Fig. 3 ist der aus der Fig. 1 bereits ersichtliche Feststellbrems-Signalgeber (1) detailliert dargestellt. Der Feststellbrems-Signalgeber (1) weist in einer vorteilhaften Ausgestaltung der Erfindung einen manuell betätigbaren Schalter (100) auf, welcher über eine selbstrückstellende, in zwei Richtungen betätigbare Wippe (102) von einem Bediener betätigbar ist. Die Wippe (102) bewirkt infolge einer mechanischen Kopplung über ein Koppelglied (103) bei manueller Betätigung eine Betätigung von drei elektrischen Schaltelementen (104, 105, 106). Die Schaltelemente (104, 105, 106) sind als voneinander galvanisch getrennte Umschalter mit jeweils drei Schaltstellungen ausgebildet. In der Fig. 3 sind die Umschalter (104, 105, 106) in ihrer jeweiligen Mittelstellung dargestellt, welche sich aufgrund der Rückstellfunktion ohne Betätigung der Wippe (102) automatisch einstellt. Am Beispiel des Umschalters (104) sind durch gestrichelte Linien (107, 108) die beiden anderen Schaltstellungen dieses Umschalters dargestellt. Die Umschalter (104, 105, 106) sind miteinander gekoppelt, d. h. bei einer Betätigung des Umschalters (104) in die Stellung (107) erfolgt eine analoge Umschaltung auch bei den Umschaltern (105, 106). Gleiches gilt für die dritte Schaltstellung (108).

Die in der Fig. 3 mit einer durchgezogenen Linie dargestellte Schaltstellung des Umschalters (104) sei nachfolgend als Neutralstellung bezeichnet. Die Schaltstellung (107) sei nachfolgend als Feststellbrems-Stellung bezeichnet. Die dritte Schaltstellung (108) sei nachfolgend als Anhängerkontroll-Stellung bezeichnet.

Die Umschalter (104, 105, 106) sind über elektrische Leitungen (112, 113, 97, 114, 115), die als Einzelleitungen Bestandteil der mehradrigen Leitung (101) sind, mit der elektronischen Steuereinrichtung (208) verbunden. Die elektrischen Schaltkontakte (116, 117, 118, 119, 120, 121, 122, 123, 124) der Umschalter (104, 105, 106) sind, wie aus der Fig. 3 ersichtlich, nicht vollständig mit elektrischen Leitungen verbunden. So ist bei dem Umschalter (104) der in der Neutralstellung kontaktierte mittlere Schaltkontakt (117) mit der elektrischen Leitung (112) verbunden. Bei dem Umschalter (105) sind bis auf den mittleren Schaltkontakt (120) die übrigen Schaltkontakte (119, 121) mit den elektrischen Leitungen (113, 97) verbunden. Bei dem Umschalter (106) sind bis auf den mittleren Schaltkontakt (123) die übrigen Schaltkontakte (122, 124) mit den elektrischen Leitungen (114, 115) verbunden.

Der Schalter (100) wird von der Stromversorgungseinrichtung (98) über die mehradrige elektrische Leitung (99) mit elektrischer Energie versorgt. Die mehradrige elektrische Leitung (99) enthält eine Einzelleitung (109), die das Versorgungspotential der Stromversorgungseinrichtung (98) mit dem Umschalter (104) verbindet, sowie Einzelleitungen (110, 111), die das Massepotential der Stromversorgungseinrichtung (98) mit den Umschaltern (105, 106) verbinden. Über die als Ausgangssignal-Leitungen wirkenden Leitungen (112, 113, 114, 115) werden der elektronischen Steuereinrichtung (208) Spannungssignale zugeführt, aus denen die elektronische Steuereinrichtung (208) die Betätigungsstellung des Schalters (100) ermitteln kann. Bezüglich des über die Leitung (112) empfangenen Spannungssignals unterscheidet die elektronische Steuereinrichtung (208) zwischen den Zuständen "Batteriespannung" und "Offen", bezüglich der über die Leitungen (113, 114, 115, 97) empfangenen Spannungssignal zwischen den Zuständen "Massepotential" und "Offen".

Durch die Übertragung von fünf Spannungssignalen, die durch drei voneinander galvanisch getrennte Umschalter (104, 105, 106) erzeugt werden, ist eine Fehlererkennung und, zumindest bei Einzel-Fehlern, eine Fehlerkorrektur der empfangenen Signale möglich. So kann die elektronische Steuereinrichtung (208) bei einem einzelnen Defekt, wie z. B. Kabelbruch oder Kurzschluß, an einer der elektrischen Leitungen (109, 110, 111, 112, 113, 114, 115) die Fehlerhaftigkeit eines der fünf Spannungssignale erkennen und durch eine Mehrheitsentscheidung der verbleibenden Spannungssignale auf den Betätigungszustand des Schalters (100) schließen.

Die von der elektronischen Steuereinrichtung (208) zu empfangenden Spannungssignale sind in der nachfolgenden Tabelle für den fehlerfreien Zustand dargestellt:

| Signalleitung | Neutralstellung | Feststellbrems-Stellung | Anhängerkontroll-Stellung |
|---|---|---|---|
| 112 | Batteriespannung | Offen | Offen |
| 113 | Offen | Massepotential | Offen |
| 97 | Offen | Offen | Massepotential |
| 114 | Offen | Massepotential | Offen |
| 115 | Offen | Offen | Massepotential |

Wie hieraus erkennbar ist, bewirkt eine Veränderung der Schalterstellung zwischen der Neutralstellung und einer der beiden anderen Schalterstellungen im fehlerfreien Zustand eine Veränderung an drei Spannungssignalen. Falls ein einzelner Fehler auftritt, verändern sich in jedem Fall noch zwei der empfangenen fünf Spannungssignale. Die elektronische Steuereinrichtung (208) entscheidet dann, welchem der drei in der Tabelle dargestellten Spannungssignal-Muster bzw. welchem Änderungsmuster die empfangenen Spannungssignale am ähnlichsten sind und erkennt hieraus die Schalterstellung.

Die zuvor beschriebene Bremsanlage weist gemäß vorteilhaften Ausgestaltungen der Erfindung die nachfolgend erläuterten Funktionen auf.

Die elektronische Steuereinrichtung (208) empfängt die Signale von dem Feststellbrems-Signalgeber (1) und wertet diese aus. Hierbei unterscheidet die elektronische Steuereinrichtung (208) zwischen den erwähnten Betätigungszuständen Neutralstellung, Feststellbrems-Stellung und Anhängerkontroll-Stellung.

Bei der Steuerung der Feststellbrems-Funktion unterscheidet die elektronische Steuereinrichtung (208) zudem zwischen zwei Betriebszuständen des Fahrzeuges, nämlich fahrendem Fahrzeug und stehendem Fahrzeug. Zur Ermittlung des jeweils vorliegenden Betriebszustandes empfängt die elektronische Steuereinrichtung (208) die Geschwindigkeitssignale über den Fahrzeugbus von den Modulen (3, 5) und wertet diese aus. Das Fahrzeug wird dann als stehendes Fahrzeug betrachtet, wenn die Geschwindigkeitssignale, die über die Rad-Sensoren (13, 23, 33, 43) ermittelt werden, eine Geschwindigkeit von Null oder zumindest in der Nähe von Null anzeigen. Andernfalls wird das Fahrzeug als fahrendes Fahrzeug betrachtet.

Wenn bei dem Feststellbrems-Signalgeber (1) eine Betätigung in Richtung Feststellbrems-Stellung detektiert wird, so prüft die elektronische Steuereinrichtung (208) zunächst, welcher Betätigungszustand der Feststellbrems-Funktion bis dahin vorgelegen hat, d. h. ob die Feststellbrems-Funktion bereits aktiviert ist oder nicht aktiviert ist. Bei bereits aktivierter Feststellbrems-Funktion bewirkt die elektronische Steuereinrichtung (208) dann eine Deaktivierung der Feststellbrems-Funktion, anderenfalls eine Aktivierung der Feststellbrems-Funktion. Es wird also in den jeweils anderen Betätigungszustand gewechselt.

So dann prüft die elektronische Steuereinrichtung (208), ob sich das Fahrzeug im stehenden oder fahrenden Betriebszustand befindet. Im Falle der Aktivierung der Feststellbrems-Funktion bei fahrendem Fahrzeug sendet die elektronische Steuereinrichtung (208) über die Datenschnittstelle ein Bremsanforderungssignal an die Module (3, 5). In einer vorteilhaften Ausgestaltung enthält das Bremsanforderungssignal einen Sollwert für die Fahrzeugverzögerung. Die Module (3, 5) empfangen das Bremsanforderungssignal und steuern daraufhin durch Druckluft-Beaufschlagung der Bremszylinder (11, 21, 31, 41) die Radbremsen nach Maßgabe des Sollwertes der Fahrzeugverzögerung an, derart, daß der Istwert der Fahrzeugverzögerung möglichst genau dem Sollwert entspricht. Die elektronische Steuereinrichtung (208) sendet dieses Bremsanforderungssignal solange aus, wie der Feststellbrems-Signalgeber (1) in der Feststellbrems-Stellung gehalten wird und das Fahrzeug sich im fahrenden Zustand befindet. Sobald der Feststellbrems-Signalgeber (1) bei fahrendem Fahrzeug nicht mehr in der Feststellbrems-Stellung gehalten wird, beendet die elektronische Steuereinrichtung (208) das Aussenden des Bremsanforderungssignals und deaktiviert die Feststellbrems-Funktion. Die Module (3, 5) beenden daraufhin den durch das Bremsanforderungssignal ausgelösten Bremseingriff.

Gemäß einer vorteilhaften Weiterbildung der Erfindung variiert die elektronische Steuereinrichtung (208) während des Zeitraumes, in dem der Feststellbrems-Signalgeber (1) bei fahrendem Fahrzeug in der Feststellbrems-Stellung gehalten wird, den Sollwert für die Fahrzeugverzögerung gemäß einer Zeitfunktion. Die Zeitfunktion beinhaltet einen kontinuierlichen Anstieg des Sollwerts von einem Minimalwert auf einen Maximalwert.

Sobald bei fahrendem Fahrzeug und aktivierter Feststellbrems-Funktion die elektronische Steuereinrichtung (208) erkennt, daß das Fahrzeug zum Stillstand kommt, bewirkt die elektronische Steuereinrichtung (208) eine Entlüftung des Federspeicherteils der Federspeicher-Bremszylinder (31, 41), wodurch die Bremswirkung der Federspeicher eintritt und damit die Feststellbremse eingelegt ist. Außerdem beendet die elektronische Steuereinrichtung (208) das Aussenden des Bremsanforderungssignals. Die Module (3, 5) beenden dann den durch das Bremsanforderungssignal ausgelösten Bremseingriff.

Gemäß einer vorteilhaften Weiterbildung der Erfindung beendet die elektronische Steuereinrichtung (208) dabei den über das Bremsanforderungssignal ausgelösten Bremseingriff nicht schlagartig, sondern sendet zunächst weiterhin das Bremsanforderungssignal aus, wobei sie die durch das Bremsanforderungssignal angeforderte Bremskraft der Betriebsbremse allmählich verringert. Gleichzeitig bewirkt die elektronische Steuereinrichtung (208) eine Entlüftung des Federspeicherteils der Federspeicher-Bremszylinder (31, 41), wodurch die Bremswirkung der Federspeicher eintritt. Dies hat den Vorteil, daß im Ergebnis immer eine annähernd gleiche Bremsbetätigungskraft an die Bremsen angelegt wird und eine Überbeanspruchung der Bremsen und der Bremsmechanik infolge einer durch Überlagerung zweier Bremsbetätigungskraft-Einflüsse erhöhten Bremsbetätigungskraft weitestgehend vermieden wird.

Gemäß einer vorteilhaften Weiterbildung der Erfindung kann zusätzlich vorgesehen sein, daß die durch das Bremsanforderungssignal angeforderte Bremskraft der Betriebsbremse dabei gerade in dem Maße verringert wird, in dem die durch die Federspeicher aufgebrachte Bremskraft zunimmt. Hierdurch wird der Übergang zwischen der Betriebsbremse und der Federspeicherbrems-Funktion noch gleichmäßiger gestaltet. Dies hat den Vorteil, daß der Bremsvorgang für den Fahrer des Fahrzeuges komfortabler und für andere Verkehrteilnehmer besser einschätzbar wird.

Bei stehendem Fahrzeug spielt die Dauer, während der der Feststellbrems-Signalgeber (1) in die Feststellbrems-Stellung betätigt ist, im wesentlichen keine Rolle. In diesem Betriebszustand des Fahrzeuges bewirkt bereits eine kurze Betätigung im Sinne eines Antippens eine Aktivierung bzw. eine Deaktivierung der Feststellbrems-Funktion.

Im Falle der Aktivierung der Feststellbrems-Funktion bei stehendem Fahrzeug bewirkt die elektronische Steuereinrichtung (208) unverzüglich eine Entlüftung der Federspeicher-Bremszylinder (31, 41), wodurch die Bremswirkung der Federspeicher eintritt und damit die Feststellbremse eingelegt ist.

Im Falle einer Deaktivierung der Feststellbrems-Funktion bei stehendem Fahrzeug bewirkt die elektronische Steuereinrichtung (208) unverzüglich eine Belüftung des Federspeicherteils der Federspeicher-Bremszylinder (31, 41), wodurch die Bremswirkung der Federspeicher aufgehoben wird und damit die Feststellbremse gelöst ist.

Gemäß einer vorteilhaften Weiterbildung der Erfindung wird eine Deaktivierung der Feststellbrems-Funktion nur bei gleichzeitiger Betätigung des Bremspedals zugelassen. Die elektronische Steuereinrichtung (208) empfängt hierfür ein die Betätigung des Bremspedals (4) anzeigendes Signal über die Datenschnittstelle von dem Vorderachs-Bremssteuermodul (3) und führt die mit der Deaktivierung der Feststellbrems-Funktion verbundenen Aktionen nur durch, wenn das Bremspedal (4) betätigt ist.

Neben der Aktivierung der Feststellbrems-Funktion mittels des Feststellbrems-Signalgebers (1) ist gemäß einer vorteilhaften Weiterbildung der Erfindung zusätzlich vorgesehen, daß die elektronische Steuereinrichtung (208) bei Empfang eines Aktivierungssignals über die Datenschnittstelle, d.h. über den Datenschnittstellen-Anschluß (62), die Feststellbrems-Funktion aktiviert. Dies hat den Vorteil, daß die Feststellbrems-Funktion auch von anderen in dem Fahrzeug vorgesehenen Systemen, die zum Informationsaustausch mit dem Feststellbrems-Modul (2) über den Datenbus geeignet sind, z.B. aus Sicherheitsgründen betätigt werden kann, beispielsweise von einer Diebstahlsicherungsanlage oder bei Fahrzeugen mit Kranbetrieb.

Über die Druckluftleitung (207) werden auch die Bremsen eines eventuell angekoppelten Anhängefahrzeuges im zuvor erläuterten Sinne mitbetätigt. Dies beinhaltet auch eine Ansteuerung der Bremsen bei fahrendem Fahrzeug nach Maßgabe des von der elektronischen Steuereinrichtung (208) ausgesendeten Bremsanforderungssignals. In diesem Fall wird ein dem Bremsanforderungssignal korrespondierendes elektrisches Signal von dem Modul (3) an das Anhängersteuerventil (6) abgegeben.

Bei Betätigung des Feststellbrems-Signalgebers (1) in die Anhängerkontroll-Stellung bewirkt die elektronische Steuereinrichtung (208) bei stehendem Fahrzeug und bereits aktivierter Feststellbrems-Funktion eine Betätigung des Anhängerkontrollventils (228) über die elektrische Leitung (229) in die zweite Schaltstellung. Hierdurch wird über die Druckluftleitung (207) der damit verbundene pneumatische Steueranschluß des Anhängersteuerventils (6) mit dem Vorratsdruck aus der Druckluft-Zufuhrleitung (233) beaufschlagt. Die Beaufschlagung bzw. die Betätigung des Anhängerkontrollventils (228) erfolgt so lange, wie der Feststellbrems-Signalgeber (1) in der Anhängerkontroll-Stellung gehalten wird. Die Druckbeaufschlagung des Anhängersteuerventils (6) bewirkt aufgrund der Invertierungsfunktion ein Lösen der Bremsen des Anhängefahrzeugs. Die Feststellbremse des Zugfahrzeugs bleibt dabei eingelegt. Sobald der Feststellbrems-Signalgeber (1) in die Neutralstellung zurückkehrt, schaltet die elektronische Steuereinrichtung (208) das Anhängerkontrollventil (228) wieder in die in der Fig. 2 dargestellte erste Schaltstellung. Hierdurch wird der mit der Druckluftleitung (207) verbundene Steueranschluß des Anhängerventils (6) entlüftet und die Bremsen des Anhängefahrzeugs in den vor Betätigung des Feststellbrems-Signalgebers (1) vorliegenden Betätigungszustand zurückversetzt. Die elektronische Steuereinrichtung (208) ignoriert dabei eine eventuelle Betätigung des Feststellbrems-Signalgebers (1) in die Anhängerkontroll-Stellung bei fahrendem Fahrzeug.

Wenn die Bremsanlage mit einer Rollbrems-Funktion ausgestattet ist, dann besteht für den Benutzer des Fahrzeugs die Möglichkeit, über den Rollbrems-Signalgeber (60) die Rollbrems-Funktion zu aktivieren bzw. zu deaktivieren. Eine Rollbrems-Funktion, die z. B. in den Modulen (3, 5) mittels Software implementiert sein kann, kann beispielsweise derart ausgestaltet sein, daß nach Aktivierung der Rollbrems-Funktion bei fahrendem Fahrzeug eine Überwachung darauf stattfindet, ob das Fahrzeug zum Stillstand kommt. Bei Erkennen des Fahrzeugstillstandes infolge einer Bremsbetätigung durch den Fahrer werden dann automatisch durch Betätigung der Ventile (12, 22) sowie der in dem Hinterachs-Bremssteuermodul (5) vorgesehenen Ventile die jeweils vorliegen-. den Bremsdrücke in sämtlichen Bremszylindern sowie in der Anhängerbremsanlage auf dem aktuell vorliegenden Niveau gehalten, ohne daß der Fahrer weiterhin das Bremspedal (4) betätigen muß. Hierdurch kann das Fahrzeug auch nach dem Lösen des Bremspedals (4) an einer geneigten Fahrbahn im Stillstand gehalten werden. Sobald erkannt wird, daß der Fahrer versucht, mit dem Fahrzeug anzufahren, werden die Radbremsen sowie die Anhängerbremsanlage automatisch gelöst.

Bei der zuvor beschriebenen Rollbrems-Funktion kann es vorkommen, daß bei Auftreten eines Defekts in der Bremsanlage, insbesondere eines elektrischen Defekts an elektrischen oder elektronischen Komponenten wie z. B. den Modulen (3, 5), der Bremsdruck in einzelnen oder allen Bremsenzylindern oder der Anhängerbremsanlage nicht gehalten werden kann. Ein möglicher Defekt ist z. B. ein Ausfall der Spannungsversorgung. In einem solchen Fall wäre das Fahrzeug vollständig ungebremst.

Gemäß einer vorteilhaften Weiterbildung der Erfindung enthält die elektronische Steuereinrichtung (208) eine Funktion zum Erkennen der Aktivierung der Rollbrems-Funktion, zum Beispiel durch Auswertung der über die Datenschnittstelle empfangenen Daten. Falls die elektronische Steuereinrichtung (208) bei aktivierter Rollbrems-Funktion zusätzlich das Auftreten eines Defekts in der Bremsanlage wahrnimmt, aktiviert die elektronische Steuereinrichtung (208) die Feststellbrems-Funktion. Hierdurch kann ein Wegrollen des Fahrzeuges auch bei von dem Fahrer per Zündungsschalter ausgeschalteter Spannungsversorgung oder bei einem der zuvor erwähnten Defekte sicher unterbunden werden. Ein weiterer Vorteil besteht darin, eine bei bekannten Lösungen erforderliche permanente Betätigung wenigstens eines der Fahrzeugpedale zum Zwecke der Aufrechterhaltung der Rollbrems-Funktion hier nicht notwendig ist. Der Fahrer des Fahrzeuges wird dadurch von unnötigen Belastungen befreit.

Gemäß einer vorteilhaften Weiterbildung der Erfindung aktiviert die elektronische Steuereinrichtung (208) bei erkannter Aktivierung der Rollbrems-Funktion immer die Feststellbrems-Funktion, d.h. auch wenn kein Defekt in der Bremsanlage vorliegt.

Bei Deaktivierung der Rollbrems-Funktion durch Betätigung des Rollbrems-Signalgebers (60) oder bei Erkennung des Anfahrens des Fahrzeugs deaktiviert die elektronische Steuereinrichtung (208) zugleich die Feststellbrems-Funktion.

Gemäß einer vorteilhaften Weiterbildung der Erfindung aktiviert die elektronische Steuereinrichtung (208) bei erkannter Aktivierung der Rollbrems-Funktion nicht pauschal die Feststellbrems-Funktion, sondern schaltet das Proportionalventil (221) in die Absperrstellung und das Bistabil-Ventil (213) in die in der Fig. 2 dargestellte Entlüftungsstellung. Hierdurch wird, solange kein Defekt in der Bremsanlage vorliegt, zunächst nichts an der Rollbrems-Funktion und deren Auswirkungen geändert. Sobald jedoch ein Defekt auftritt, der beispielsweise auch von der elektronischen Steuereinrichtung (208) durch Empfang eines Defekt-Informationssignals von einem der Module (3, 5) über die Datenschnittstelle erkannt werden kann, schaltet die elektronische Steuereinrichtung (208) das Proportionalventil (221) in die Durchlaßstellung. Hierdurch werden die Federspeicher-Bremszylinder (31, 41) entlüftet, so daß die Bremswirkung der Federspeicher eintritt. Zusätzlich wird über die Druckluftleitung (207) die Bremsanlage des Anhängefahrzeuges vollständig betätigt.

Wenn der Defekt darin besteht, daß die Spannungsversorgung für das Feststellbrems-Modul (2) und ggf. andere Teile der Bremsanlage ausfällt, dann erfolgt ebenfalls eine durch Federkraft bewirkte automatische Rückstellung des Proportionalventils (221) in die Durchlaßstellung. Das Bistabil-Ventil (213) hat ohnehin die Eigenschaft, bei fehlender elektrischer Betätigung seine Schaltstellung beizubehalten, so daß auch in diesem Fall die Federspeicher-Bremszylinder (31, 41) sowie die Druckluftleitung (207) entlüftet werden, so daß die Bremswirkung der Federspeicher eintritt und die Bremsanlage des Anhängefahrzeuges betätigt wird.

Diese Weiterbildung der Erfindung hat den Vorteil, daß zunächst der ohnehin in den Bremszylindern vorhandene Druck zum Bremsen weiter benutzt wird. Somit wird keine zusätzliche Druckluft verbraucht. Nur im Fehlerfall erfolgt eine mit Luftverbrauch verbundene Umschaltung auf die Bremswirkung der Federspeicher.

Gemäß einer vorteilhaften Weiterbildung der Erfindung beinhaltet die elektronische Steuereinrichtung (208) einen Modus zum einstellbaren Betätigen der Feststellbremse, d. h. zur Einstellung einer bestimmten von der Feststellbremse aufzubringenden Bremskraft. Hierbei steuert die elektronische Steuereinrichtung (208) gemäß einem Bremsanforderungssignal, welches einen z. B. Bremsdruck-Sollwert beinhaltet, die Ventile (213, 221) derart an, daß der sich in der Druckluftleitung (225) einstellende Bremsdruck wenigstens annähernd dem Bremsdruck-Sollwert entspricht. Die elektrische Steuereinrichtung (208) überprüft dabei mittels des Drucksensors (226) den sich in der Druckluftleitung (225) einstellenden Druck und regelt gegebenenfalls durch Betätigung der Ventile (213, 221) den Druck nach. Statt des Bremsdruck-Sollwerts kann das Bremsanforderungssignal auch beispielsweise eine Fahrzeug-Sollverzögerung enthalten. In einem solchen Fall regelt die elektronische Steuereinrichtung (208) den in der Druckluftleitung (225) einzustellenden Druck gemäß einer Istverzögerung, die die elektronische Steuereinrichtung (208) aufgrund von über die Datenschnittstelle empfangenen Geschwindigkeitssignalen der Rad-Sensoren (13, 23, 33, 43) berechnet.

Das Bremsanforderungssignal kann die elektronische Steuereinrichtung (208) beispielsweise über die Datenschnittstelle von einem der Module (3, 5) empfangen. Dieser Modus wird auch als automatische Hilfsbremsung bezeichnet. Die automatische Hilfsbremsung wird von einem der Module (3, 5) durch Aussenden bestimmter Bremsanforderungssignale an die elektronische Steuereinrichtung (208) über den Datenbus eingesetzt, wenn an wenigstens einer mit einem Federspeicher-Bremszylinder bestückten Radbremse der Betriebsbremskreis ausfällt. In diesem Fall kann über die Federspeicher-Bremsfunktion solcher Bremszylinder noch eine Bremswirkung erzielt werden.

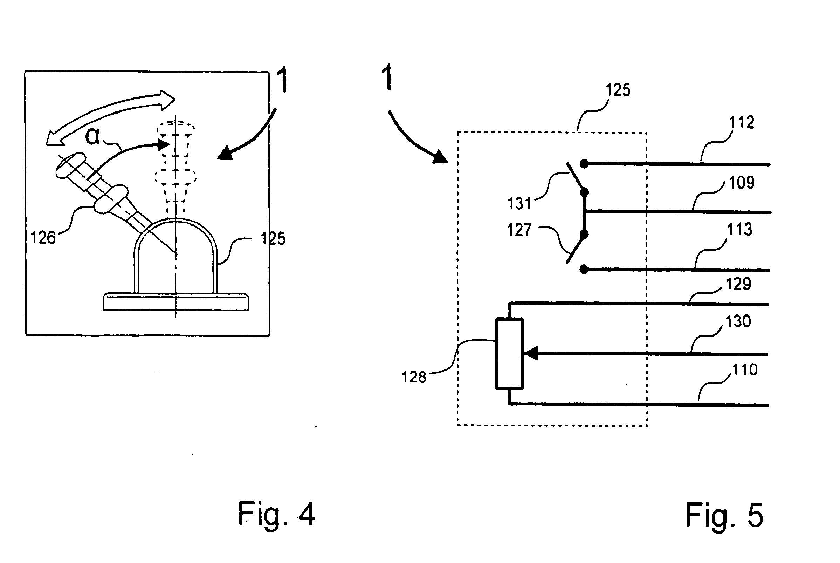

Gemäß einer vorteilhaften Weiterbildung der Erfindung kann der Feststellbrems-Signalgeber (1) auch als ein Proportionalbrems-Signalgeber ausgebildet sein, der proportionale Signale zur Einstellung der von der Feststellbremse aufzubringenden Bremskraft abgibt. Ein solcher Proportionalbrems-Signalgeber wird nachfolgend anhand der Fig. 4 bis 6 erläutert.

Der in der Fig. 4 dargestellte Proportionalbrems-Signalgeber (1) weist ein Gehäuse (125) sowie einen von den Bediener des Fahrzeugs manuell verschwenkbaren Betätigungshebel (126) auf, der in dem Gehäuse (125) drehbar gelagert ist und gegen die Kraft einer Feder betätigbar ist. Das Maß für die Betätigung des Betätigungshebels (126) gegenüber der in der Fig. 4 mit durchgezogenen Linien dargestellten Stellung wird nachfolgend als Betätigungswinkel (α) bezeichnet. Der gegen die Federkraft betätigbare Betätigungshebel (126) wird bei fehlender manueller Betätigung infolge der Federkraft in die in der Fig. 4 dargestellte Stellung zurückgestellt bzw. in dieser Stellung gehalten. In einer vorteilhaften Ausgestaltung der Erfindung rastet der Betätigungshebel (126) in einer bestimmten Stellung, z. B. in der in der Fig. 4 mit gestrichelten Linien dargestellten Stellung, ein, ist jedoch über diese Einrast-Stellung hinaus bis zu einer Endstellung betätigbar. In einer vorteilhaften Ausgestaltung der Erfindung wird die Betätigung des Betätigungshebels (126) in die Einrast-Stellung als Kriterium für die Aktivierung der Feststellbrems-Funktion mit voller Federspeicher-Bremswirkung verwendet. Die Einrast-Stellung entspricht der Feststellbrems-Stellung des zuvor beschriebenen Feststellbrems-Signalgebers (1). Eine Betätigung über die Einrast-Stellung hinaus wird als Kriterium für die Aktivierung der Anhängerkontroll-Funktion verwendet. Diese Betätigung entspricht der Anhängerkontroll-Stellung des zuvor beschriebenen Feststellbrems-Signalgebers (1). Ein Loslassen des Betätigungshebels (126) aus dieser Anhängerkontroll-Stellung bewirkt infolge der Federkraft ein Zurückstellen des Betätigungshebels (126) in die Einrast-Stellung.

In der Fig. 5 ist der elektrische Aufbau von in dem Gehäuse (125) angeordneten elektrischen Signalgebern dargestellt. In dem Gehäuse (125) ist ein erstes Schaltelement (131), ein zweites Schaltelement (127) sowie ein Proportionalelement (128). Das Proportionalelement (128) kann zum Beispiel als Potentiometer ausgebildet sein, die Schaltelemente (131, 127) als Taster. Die Betätigung des Proportionalelements (128) erfolgt unmittelbar durch Verschwenken des Betätigungshebels (126). Die Schaltelemente (131, 127) sind nicht von einem Bediener separat manuell betätigbar, sondern ebenfalls durch das Verschwenken des Betätigungshebels (126).

Ihre Betätigung erfolgt über Schaltnocken, welche bei Verschwenken des Betätigungshebels (126) bewegt werden.

Die Schaltelemente (131, 127) werden über die bereits erwähnte elektrische Leitung (109) von der elektronischen Steuereinrichtung (208) mit der Batteriespannung versorgt. Die Schaltelemente (131, 127) geben Schaltsignale (S1, S2) über die erwähnten elektrischen Leitungen (112, 113) an die elektronische Steüereinrichtung (208) ab. Das Proportionalelement (128) wird von der elektronischen Steuereinrichtung (208) über die erwähnte elektrische Leitung (110) mit Massepotential und über eine elektrische Leitung (129) mit einem vorbestimmten Spannungspotential versorgt. Das Proportionalelement (128) gibt ein dem Betätigungswinkel (α) entsprechendes Proportionalsignal (P), beispielsweise ein Spannungssignal, über eine elektrische Leitung (130) an die elektronische Steuereinrichtung (208) ab.

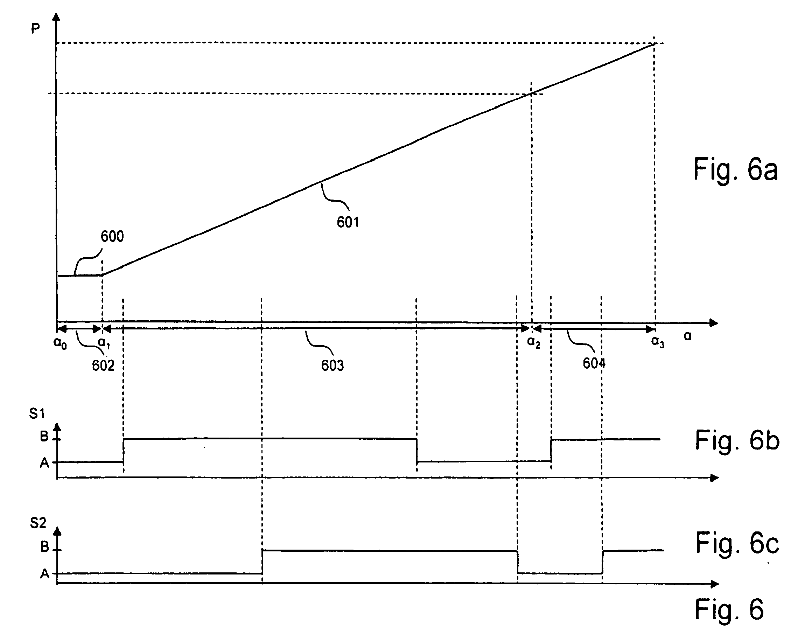

In der Fig. 6 sind Kennlinienverläufe des Proportionalsignals (P) sowie der Schaltsignale (S1, S2) über den Betätigungswinkel (α) grafisch dargestellt. Bezüglich des Betätigungswinkels (α) sind drei Bereiche (602, 603, 604) festgelegt, welche den bereits erläuterten Betätigungsstellungen des Feststellbrems-Signalgebers (1), nämlich Neutralstellung, Feststellbrems-Stellung und Anhängerkontroll-Stellung, zugeordnet sind. So ist der zwischen den Betätigungswinkel-Werten (α₀, α₁) liegende Bereich (602) der Neutralstellung zugeordnet, der zwischen den Betätigungswinkel-Werten (α₁, α₂) liegende Proportional-Bereich (603) der Feststellbrems-Stellung zugeordnet, und der zwischen den Betätigungswinkel-Werten (α₂, α₃) liegende Bereich (604) der Anhängerkontroll-Stellung zugeordnet. Am oberen Ende (α₂) des Feststellbrems-Bereichs befindet sich der Betätigungshebel (126) in der Einrast-Stellung.

Der den Kennlinienverlauf des Proportionalsignals (P) des Proportionalelements (128) darstellende Fig. 6a zeigt eine aus zwei Geradenstücken (600, 601) zusammengesetzte Kennlinie, welche in dem Proportional-Bereich (603) eine proportionale Beziehung zwischen dem Betätigungswinkel (α) und dem Proportionalsignal (P) aufweist.

In der Fig. 6b ist der Kennlinienverlauf des Schaltsignals (S1) des Schaltelements (131) dargestellt. Fig. 6c zeigt den Signalverlauf des Schaltsignals (S2) des Schaltelements (127). Ein Signalzustand "A" stellt dabei einen geöffneten Schaltzustand dar, ein Signalzustand "B" einen geschlossenen Schaltzustand des jeweiligen Schaltelements (131, 127). Die Schaltelemente (131, 127) dienen zur Erzeugung redundanter Signale im Falle eines Defekts oder einer Störung an den Proportionalelement (128). Die Kennlinienverläufe der Schaltsignale (S1, S2) sind im Bezug auf die Bereiche (602, 603, 604) derart gewählt, daß auch bei einem Defekt an dem Proportionalelement (128) durch Auswertung der Schaltsignale (S1, S2) eine zumindest grobe Bestimmung der Lage des Betätigungswinkels (α) ermöglicht wird.

Die elektronische Steuereinrichtung (208) empfängt das Proportionalsignal (P) und entscheidet zunächst durch Klassifizierung dieses Signals in einen der Bereiche (602, 603, 604), ob mittels des Betätigungshebels (126) die Neutralstellung, der Feststellbrems-Bereich oder die Anhängerkontroll-Stellung angewählt ist. Im Falle des Feststellbrems- Bereichs berechnet die elektronische Steuereinrichtung (208) aus dem Proportionalsignal (P) ein Bremsanforderungssignal bzw. direkt einen in der Druckluftleitung (225) einzustellenden Druckwert. Bei fahrendem Fahrzeug gibt die elektronische Steuereinrichtung (208) das Bremsanforderungssignal an die Module (3, 5) aus, welcher in der bereits erläuterten Weise die ihnen jeweils zugeordneten Bremsen nach Maßgabe des Bremsanforderungssignals betätigen. Außerdem stellt die elektronische Steuereinrichtung (208) bei fahrendem Fahrzeug den in der Druckluftleitung (225) einzustellenden Druckwert durch Betätigung der Ventile (213, 221) ein.

Bei stehendem Fahrzeug aktiviert die elektronische Steuereinrichtung (208) im Falle einer Betätigung des Betätigungshebels (126) in die Einrast-Stellung die Feststellbrems-Funktion mit maximal möglicher Bremswirkung.

Des weiteren sendet die elektronische Steuereinrichtung (208) über die Datenschnittstelle das berechnete Bremsanforderungssignal beispielsweise an die Module (3, 5). In einer vorteilhaften Ausgestaltung der Erfindung weisen die Module (3, 5) eine Funktion auf, nach der sie bei einem Defekt an dem mit dem Bremspedal (4) verbundenen Bremswertgeber dieses von der elektronischen Steuereinrichtung (208) empfangbare Bremsanforderungssignal für die Abbremsung des Fahrzeuges verwenden, d.h. für die Bestimmung und Einstellung einer Bremskraft. Hierdurch hat der Fahrer des Fahrzeuges auch im Fall eines Defektes an dem Bremswertgeber eine Möglichkeit zur abstufbaren Bremsung des Fahrzeuges, wodurch die Betriebssicherheit der Bremsanlage und des Fahrzeuges erhöht wird.

Gemäß einer vorteilhaften Ausgestaltung der Erfindung ist die elektronische Steuereinrichtung (208) mit einem elektrischen Energiespeicher (236) versehen, welcher zur zumindest teilweisen Aufrechterhaltung der Feststellbrems-Funktion bei einem Ausfall oder einer Störung der fahrzeugseitigen Spannungsversorgung dient. Der elektrische Energiespeicher (236) wird während des störungsfreien Betriebes der fahrzeugseitigen Spannungsversorgung über den Spannungsversorgungsanschluß (202) permanent in einem vollgeladenen Zustand gehalten. Bei einem Ausfall oder einer Störung der fahrzeugseitigen Spannungsversorgung wird die elektronische Steuereinrichtung (208) zumindest teilweise von der Spannungsversorgung getrennt, um Strom zu sparen. In diesem Betriebszustand steuert der Feststellbrems-Signalgeber (1) über eine elektrische Umschaltung direkt das Bistabil-Ventil (213). Hierbei ist die Feststellbrems-Funktion vom Bediener noch aktivierbar und deaktivierbar, jedoch entfallen die von der elektronischen Steuereinrichtung (208) im störungsfreien Zustand durchführbaren weiteren Funktionen, wie z. B. die abgestufte Ansteuerung der Betriebsbremse bei fahrendem Fahrzeug, die Anhängerkontroll-Funktion oder die nachfolgend näher erläuterte Standsicherheitsfunktion. In einer vorteilhaften Ausgestaltung der Erfindung ist der elektrische Energiespeicher (236) in Form von in der elektronischen Steuereinrichtung (208) baulich angeordneten Hochkapazitätskondensatoren ausgebildet.

Gemäß einer vorteilhaften Weiterbildung der Erfindung ist die elektronische Steuereinrichtung (208) mit einem elektrisch betätigbaren Anzeigeelement (237) verbunden. Das Anzeigeelement (237) dient zur optischen Anzeige des Betätigungszustands der Feststellbremse und ist in diesem Zusammenhang vorzugsweise im Sichtbereich des Bedieners des Fahrzeuges angeordnet. Das Anzeigeelement (237) ist geeignet zur Anzeige von zwei Zuständen, z. B. Feststellbrems-Funktion aktiviert und deaktiviert. Hierfür weist das Anzeigeelement (237) eine bistabile Schaltfunktion auf, welche den zuletzt eingestellten Anzeigezustand auch nach Abschalten einer Versorgungsspannung beibehält. Das Anzeigeelement (237) ist vorzugsweise durch relativ kurze elektrische Impulse von der elektronischen Steuereinrichtung (208) betätigbar.

Gemäß einer vorteilhaften Weiterbildung der Erfindung ist statt des Standsicherheitsventils (210) eine in Form eines Programmteils in der elektronischen Steuereinrichtung (208) ausgeführte Standsicherheitsfunktion vorgesehen, welche bei stehendem Fahrzeug automatisch eine Aktivierung der Feststellbrems-Funktion bewirkt, wenn der Vorratsdruck, d. h. der Druck in dem für die Bremszylinder (31, 41) mit Federspeicher-Bremsfunktion zuständigen zweiten Druckluftvorratsbehälter (52), den Lösedruck der Federspeicher-Bremsfunktion unterschreitet, mit anderen Worten die Federspeicher-Bremsfunktion unwirksam werden würde. Hierdurch kann das Standsicherheitsventil (210) eingespart werden, was zu günstigeren Herstellungskosten für das Feststellbrems-Modul (2) führt. Im Rahmen der Standsicherheitsfunktion überwacht die elektronische Steuereinrichtung (208) den Vorratsdruck sowie den Betriebszustand des Fahrzeuges, d.h. ob sich das Fahrzeuges im stehenden oder fahrenden Zustand befindet. Die hierfür erforderlichen Datensignale empfängt die elektronische Steuereinrichtung (208) über die Datenschnittstelle von dem Fahrzeugbus. Wenn die elektronische Steuereinrichtung (208) hierbei feststellt, daß bei stehendem Fahrzeug der Vorratsdruck den für das Auslösen der Federspeicher-Bremsfunktion festgelegten Mindestdruckwert unterschreitet und bis dahin die Feststellbrems-Funktion nicht aktiviert ist, was z. B. daran erkennbar ist, daß das Bistabil-Ventil (213) in der Entlüftungsstellung steht, dann bewirkt die elektronische Steuereinrichtung (208) automatisch eine Aktivierung der Feststellbrems-Funktion. Hierdurch wird das Fahrzeug im Stillstand gehalten. Diese automatische Aktivierung der Feststellbrems-Funktion kann von einem Bediener des Fahrzeugs durch eine Betätigung des Feststellbrems-Signalgebers (1) in die Feststellbrems-Stellung wieder deaktiviert werden. In einer vorteilhaften Ausgestaltung der Erfindung ignoriert die elektronische Steuereinrichtung (208) eine Betätigung des Feststellbrems-Signalgebers (1) zum Deaktivieren der Feststellbrems-Funktion zumindest solange, bis festgestellt wird, daß der Vorratsdruck wieder größer ist als Mindestdruckwert.

Gemäß einer weiteren vorteilhaften Ausgestaltung der Erfindung erfolgt die Ansteuerung der Anhängerbremsanlage über das Anhängersteuerventil (6) ausschließlich über die Module (3, 5), d. h. ohne direkte Beeinflussung durch das Feststellbrems-Modul (2). In diesem Fall kann auf das Anhängerkontrollventil (228) sowie die zugehörigen Druckluftleitungen und den Steuereingang am Anhängersteuerventil (6) verzichtet werden. In dieser Ausgestaltung der Erfindung sendet die elektronische Steuereinrichtung (208) den Betätigungswunsch für die Feststellbrems-Funktion gemäß Betätigung des Feststellbrems-Signalgebers (1) über die Datenschnittstelle an die Module (3, 5). Die Module (3, 5) betätigen dann über das Anhängersteuerventil (6) die Anhängerbremsanlage gemäß den erläuterten Betätigungsprinzipien, insbesondere der Teilbremsung bei fahrendem Fahrzeug und der Vollbremsung erst bei stehendem Fahrzeug. Bei Betätigung des Feststellbrems-Signalgebers (1) in die Anhängerkontrollstellung sendet die elektronische Steuereinrichtung (208) ein entsprechendes Signal über die Datenschnittstelle an die Module (3, 5). Die Module (3, 5) bewirken dann über das Anhängersteuerventil (6) ein Lösen der Bremsen des Anhängerfahrzeuges, solange die elektronischen Steuereinrichtung (208) das diesbezügliche Signal aussendet.

Gemäß einer vorteilhaften Ausgestaltung der Erfindung weist die elektronische Steuereinrichtung (208) eine Betriebsart auf, bei der die elektronische Steuereinrichtung (208) die Feststellbrems-Funktion immer dann automatisch, d. h. ohne Betätigung des Feststellbrems-Signalgebers (1), aktiviert, wenn bei stehendem Fahrzeug der Motor abgestellt wird, z. B. durch Ausschalten der Zündung. Diese Betriebsart kann per Voreinstellung z. B. von dem Herstellers des Fahrzeuges für bestimmte Arten von Fahrzeugen ausgewählt werden und kann dann von einem Benutzer des Fahrzeugen nicht mehr generell deaktiviert werden. Bei einer Auswahl dieser Betriebsart kann es in Einzelfällen jedoch erforderlich sein, z. B. um ein defektes Fahrzeug abzuschleppen, daß die automatische Aktivierung der Feststellbrems-Funktion unterbunden werden soll. Zu diesem Zweck prüft die elektronische Steuereinrichtung (208) vor der automatischen Aktivierung der Feststellbrems-Funktion, ob der Feststellbrems-Signalgeber (1) manuell in die Anhängerkontroll-Stellung gestellt ist und beim Abstellen des Motors in dieser Stellung gehalten wird. Wird ein solcher Fall erkannt, so bewirkt die elektronische Steuereinrichtung (208) keine automatische Aktivierung der Feststellbrems-Funktion.

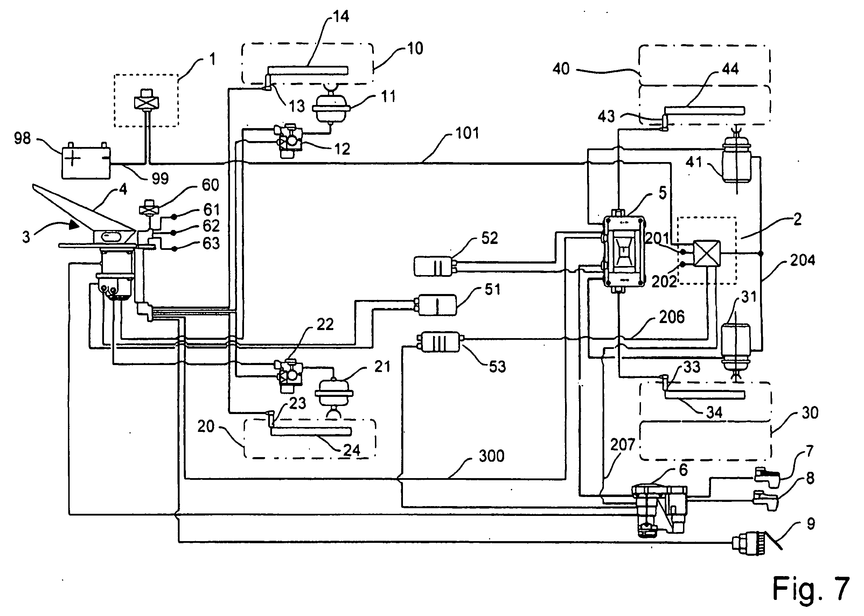

In der Fig. 7 ist eine weitere vorteilhafte Ausgestaltung einer Druckluftbremsanlage dargestellt. Die Druckluftbremsanlage gemäß Fig. 7 entspricht weitgehend der Druckluftbremsanlage gemäß Fig. 1, mit dem Unterschied, daß bei der Druckluftbremsanlage gemäß Fig. 7 keine Rohrbruchsicherung vorgesehen ist und infolgedessen die Wechselventile (35, 45) , die in das Feststellbrems-Modul (2) eingeschraubten Wechselventile (211, 230) sowie die dazugehörigen, doppelt ausgeführten Druckluftleitungen entfallen. Das Feststellbrems-Modul (2) wird dabei von dem Druckluftvorratsbehälter (53) mit Druckluft versorgt. Die Ausgestaltung der Druckluftbremsanlage gemäß Fig. 7 hat den Vorteil, daß weniger Druckluftleitungen verlegt werden müssen und die Wechselventile eingespart werden können.

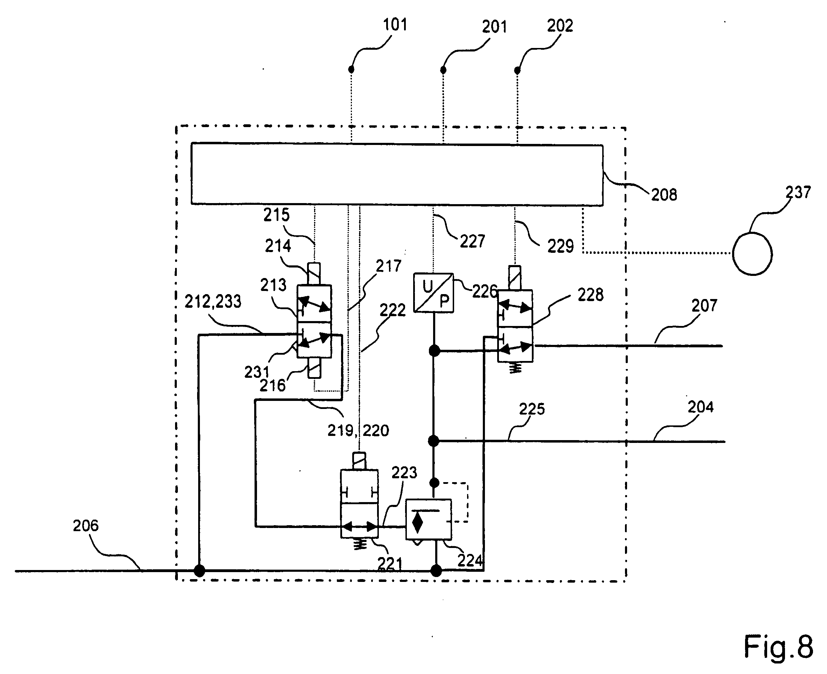

In der Fig. 8 ist eine weitere vorteilhafte Ausgestaltung eines Feststellbrems-Modul (2) dargestellt. Das Feststellbrems-Modul (2) gemäß Fig. 8 entspricht weitgehend dem Feststellbrems-Modul (2) gemäß Fig. 2, mit dem Unterschied, daß bei dem Feststellbrems-Modul (2) gemäß Fig. 8 keine Rohrbruchsicherung vorgesehen ist und außerdem das optionale Standsicherheitsventil (210) sowie das optionale Handbetätigungsventil (218) nicht vorgesehen sind. Die Wirkungsweise entspricht im übrigem dem Feststellbrems-Modul (2) gemäß Fig. 2. Die Ausgestaltung des Feststellbrems-Moduls (2) gemäß Fig. 8 hat den Vorteil, daß die Kosten für die optionalen Ventile (210, 218) eingespart werden können. In Verbindung mit der bereits erläuterten, in der elektronischen Steuereinrichtung (208) als Programmteil vorgesehenen Standsicherheitsfunktion wird dieser Vorteil ohne Einbuße an Sicherheit erzielt.

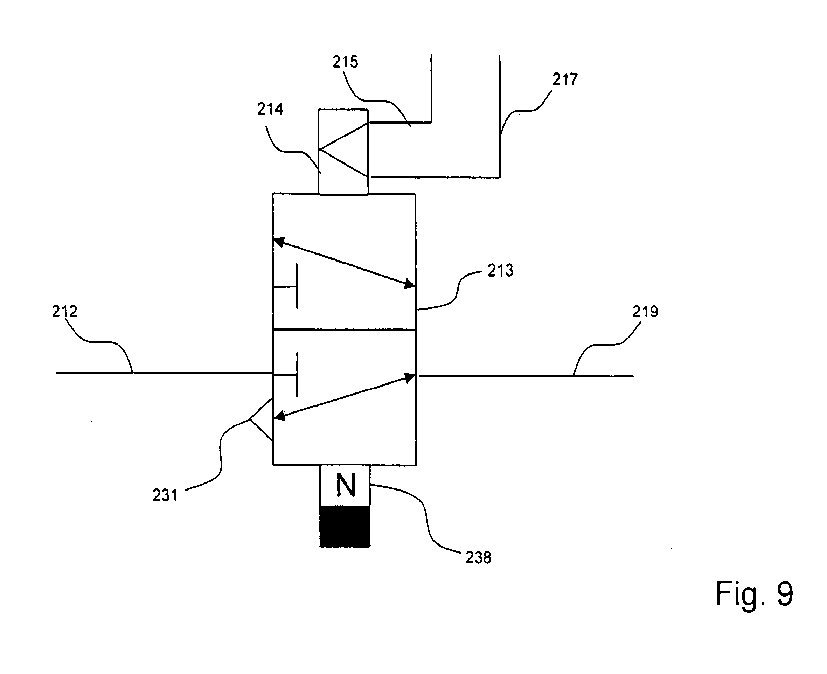

In der Fig. 9 ist eine weitere vorteilhafte Ausgestaltung des Bistabil-Ventils (213) dargestellt. Das Bistabil-Ventil (213) gemäß Fig. 9 weist im Unterschied zu dem in den Fig. 2, 8 dargestellten Bistabil-Ventil nur einen einzigen Elektromagneten (214) zur Betätigung sowie einen Permanentmagneten (238) auf. Der Elektromagnet (214) dient dabei zur Umschaltung des Bistabil-Ventils (213) in beide Schaltstellungen, nämlich Entlüftungsstellung und Druckzufuhrstellung, wobei die Umschaltung durch Umpolung der über die Leitungen (215, 217) von der elektronischen Steuereinrichtung (208) an den Elektromagneten (214) zugeführten elektrische Spannung erfolgt. Der Permanentmagnet (238) dient dazu, das Bistabil-Ventil (213) in der gewünschten Schaltstellung zu halten, ohne daß ständig die elektrische Spannung dem Elektromagneten (214) zugeführt werden muß. Die Umschaltung des Bistabil-Ventils (213) kann daher von der elektronischen Steuereinrichtung (208) durch einen Spannungsimpuls ausgelöst werden. Hierdurch kann das Bistabil-Ventil (213) mit einem sehr geringen Energiebedarf betrieben werden.

## Patentansprüche

1. Druckmittelbetriebene Bremsanlage für ein Fahrzeug mit einer Feststellbrems-Funktion, bei der infolge manueller Betätigung eines elektrischen Feststellbrems-Signalgebers (1) wenigstens eine Radbremse der Bremsanlage ohne Betätigung eines Bremspedals über einen mit dem Druckmittel beaufschlagbaren Aktuator betätigbar ist,
wobei ein Feststellbrems-Modul (2) vorgesehen ist, in welches eine elektronische Steuereinrichtung (208) sowie eine von der elektronischen Steuereinrichtung (208) elektrisch betätigbare Ventileinrichtung (213, 221, 228) integriert sind,
wobei die elektronische Steuereinrichtung (208) bei Empfang eines die Aktivierung der Feststellbrems-Funktion anfordernden elektrischen Betätigungssignals des Feststellbrems-Signalgebers (1) die Feststellbrems-Funktion aktiviert,
wobei die elektronische Steuereinrichtung (208) im Rahmen der Feststellbrems-Funktion mittels der elektrisch betätigbaren Ventileinrichtung (213, 221, 228) die Druckmittel-Beaufschlagung des Aktuators steuert,
**dadurch gekennzeichnet, dass**
ein Rollbrems-Signalgeber (60) zur Aktivierung einer Rollbrems-Funktion vorgesehen ist und die elektronische Steuereinrichtung (208) eine Funktion zum Erkennen der Aktivierung der Rollbrems-Funktion enthält, wobei die elektronische Steuereinrichtung (208) derart ausgebildet ist, dass sie die Feststellbrems-Funktion aktiviert, falls sie bei aktivierter Rollbrems-Funktion zusätzlich das Auftreten eines Defekts in der Bremsanlage wahrnimmt.

2. Druckmittelbetriebene Bremsanlage für ein Fahrzeug mit einer Feststellbrems-Funktion, bei der infolge manueller Betätigung eines elektrischen Feststellbrems-Signalgebers (1) wenigstens eine Radbremse der Bremsanlage ohne Betätigung eines Bremspedals über einen mit dem Druckmittel beaufschlagbaren Aktuator betätigbar ist,
wobei ein Feststellbrems-Modul (2) vorgesehen ist, in welches eine elektronische Steuereinrichtung (208) sowie eine von der elektronischen Steuereinrichtung (208) elektrisch betätigbare Ventileinrichtung (213, 221, 228) integriert sind,
wobei die elektronische Steuereinrichtung (208) bei Empfang eines die Aktivierung der Feststellbrems-Funktion anfordernden elektrischen Betätigungssignals des Feststellbrems-Signalgebers (1) die Feststellbrems-Funktion aktiviert,
wobei die elektronische Steuereinrichtung (208) im Rahmen der Feststellbrems-Funktion mittels der elektrisch betätigbaren Ventileinrichtung (213, 221, 228) die Druckmittel-Beaufschlagung des Aktuators steuert,
**dadurch gekennzeichnet, dass**
die elektrisch betätigbare Ventileinrichtung (213, 221, 228) ein Bistabil-Ventil (213) mit einer bistabilen Schaltfunktion mit zwei Schaltzuständen aufweist, wobei in einem ersten Schaltzustand Druckmittel zu dem Aktuator zuführbar und in einem zweiten Schaltzustand Druckmittel von dem Aktuator abführbar ist,
wobei in dem Druckmittelströmungspfad zwischen dem Bistabil-Ventil (213) und dem Aktuator ein Ventil (221) angeordnet ist, durch welches die Druckmittelströmung zwischen dem Bistabil-Ventil (213) und dem Aktuator absperrbar ist.

3. Druckmittelbetriebene Bremsanlage für ein Fahrzeug mit einer Feststellbrems-Funktion, bei der infolge manueller Betätigung eines elektrischen Feststellbrems-Signalgebers (1) wenigstens eine Radbremse der Bremsanlage ohne Betätigung eines Bremspedals über einen mit dem Druckmittel beaufschlagbaren Aktuator betätigbar ist,
wobei ein Feststellbrems-Modul (2) vorgesehen ist, in welches eine elektronische Steuereinrichtung (208) sowie eine von der elektronischen Steuereinrichtung (208) elektrisch betätigbare Ventileinrichtung (213, 221, 228) integriert sind,
wobei die elektronische Steuereinrichtung (208) bei Empfang eines die Aktivierung der Feststellbrems-Funktion anfordernden elektrischen Betätigungssignals des Feststellbrems-Signalgebers (1) die Feststellbrems-Funktion aktiviert,
wobei die elektronische Steuereinrichtung (208) im Rahmen der Feststellbrems-Funktion mittels der elektrisch betätigbaren Ventileinrichtung (213, 221, 228) die Druckmittel-Beaufschlagung des Aktuators steuert,
**dadurch gekennzeichnet, dass**
eine Standsicherheitsfunktion vorgesehen ist, welche bei stehendem Fahrzeug automatisch eine Aktivierung der Feststellbrems-Funktion bewirkt, wenn der Vorratsdruck den Lösedruck der Federspeicher-Bremsfunktion unterschreitet.

4. Bremsanlage nach wenigstens einem der vorhergehenden Ansprüche, **dadurch gekennzeichnet, dass** der Aktuator als FederspeicherBremszylinder (31, 41) ausgebildet ist.

5. Bremsanlage nach wenigstens einem der vorhergehenden Ansprüche, **dadurch gekennzeichnet, dass** bei Empfang des die Aktivierung der Feststellbrems-Funktion anfordernden elektrischen Betätigungssignals die Druckmittel-Beaufschlagung des Aktuators verringert wird.

6. Bremsanlage nach wenigstens einem der vorhergehenden Ansprüche, **dadurch gekennzeichnet, dass** in oder an dem Feststellbrems-Modul (2) ein elektrischer Energiespeicher (236) vorgesehen ist, welcher zur zumindest teilweisen Aufrechterhaltung der Feststellbrems-Funktion bei einem Ausfall oder einer Störung der fahrzeugseitigen Spannungsversorgung dient.

7. Bremsanlage nach wenigstens einem der vorhergehenden Ansprüche, jedoch ohne Rückbezug auf Anspruch 2, **dadurch gekennzeichnet, dass** die elektrisch betätigbare Ventileinrichtung (213, 221, 228) ein Bistabil-Ventil (213) mit einer bistabilen Schaltfunktion mit zwei Schaltzuständen aufweist, wobei in einem ersten Schaltzustand Druckmittel zu dem Aktuator zuführbar und in einem zweiten Schaltzustand Druckmittel von dem Aktuator abführbar ist.

8. Bremsanlage nach Anspruch 7, **dadurch gekennzeichnet, dass** in dem Druckmittelströmungspfad zwischen dem Bistabil-Ventil (213) und dem Aktuator ein Ventil (221) angeordnet ist, durch welches die Druckmittelströmung zwischen dem Bistabil-Ventil (213) und dem Aktuator absperrbar ist.

9. Bremsanlage nach wenigstens einem der Ansprüche 7 oder 8, **dadurch gekennzeichnet, dass** das Bistabil-Ventil (213) als durch zwei Elektromagnete betätigbares 3/2-Wegeventil ausgebildet ist.

10. Bremsanlage nach wenigstens einem der vorhergehenden Ansprüche, **dadurch gekennzeichnet, dass** zwischen dem Druckmittelvorrat und dem Aktuator wenigstens ein Handbetätigungsventil (218) angeordnet ist, welches eine manuelle Druckmittelzufuhr bzw. - abfuhr von dem Aktuator erlaubt.

11. Bremsanlage nach Anspruch 10, **dadurch gekennzeichnet, dass** das Handbetätigungsventil als 4/3-Wegeventil ausgebildet ist.

12. Bremsanlage nach wenigstens einem der vorhergehenden Ansprüche, **dadurch gekennzeichnet, dass** zwischen dem Ventil (221) und dem Aktuator ein Relaisventil (224) angeordnet ist.

13. Bremsanlage nach wenigstens einem der vorhergehenden Ansprüche, **dadurch gekennzeichnet, dass** zwischen dem Druckmittelvorrat und dem Aktuator ein Standsicherheitsventil (210) angeordnet ist.

14. Bremsanlage nach wenigstens einem der vorhergehenden Ansprüche, **dadurch gekennzeichnet, dass** das Feststellbremsmodul (2) eingangs- und/oder ausgangsseitig mit Wechselventilen (211, 230) versehen ist, welche eine Einbindung in eine aus Sicherheitsgründen zweikreisig ausgebildete Bremsanlage ermöglichen.

15. Bremsanlage nach Anspruch 14, **dadurch gekennzeichnet, dass** die Wechselventile (211, 230) direkt in Druckmittelanschlüsse des Feststellbremsmoduls (2) eingeschraubt sind.

16. Bremsanlage nach wenigstens einem der vorhergehenden Ansprüche, **dadurch gekennzeichnet, dass** ein Anhängerkontrollventil (228) zum Lösen der Bremsen eines Anhängefahrzeuges vorgesehen ist.

17. Bremsanlage nach wenigstens einem der vorhergehenden Ansprüche, jedoch ohne Rückbezug auf Anspruch 3, **dadurch gekennzeichnet, dass** eine Standsicherheitsfunktion vorgesehen ist, welche bei stehendem Fahrzeug automatisch eine Aktivierung der Feststellbrems-Funktion bewirkt, wenn der Vorratsdruck den Lösedruck der Federspeicher-Bremsfunktion unterschreitet.

18. Bremsanlage nach wenigstens einem der vorhergehenden Ansprüche, **dadurch gekennzeichnet, dass** der Feststellbrems-Signalgeber (1) eine Neutralstellung, eine Feststellbrems-Stellung und eine Anhängerkontroll-Stellung aufweist.

19. Bremsanlage nach Anspruch 18, **dadurch gekennzeichnet, dass** die elektronische Steuereinrichtung (208) während der Dauer der Betätigung des Feststellbrems-Signalgeber (1) in die Feststellbrems-Stellung einen Bremskraftwert inkrementiert und die Bremskraft der Feststellbrems-Funktion nach Maßgabe des Bremskraftwerts einstellt.

20. Bremsanlage nach Anspruch 18 oder 19, **dadurch gekennzeichnet, dass** eine kurze Betätigung des Feststellbrems-Signalgeber (1) in die Feststellbrems-Stellung eine Aktivierung der Feststellbrems-Funktion mit maximaler Bremskraft bewirkt, sofern die Feststellbrems-Funktion noch nicht aktiviert war und das Fahrzeug sich im Stillstand befindet.

21. Bremsanlage nach wenigstens einem der vorhergehenden Ansprüche, **dadurch gekennzeichnet, dass** der Feststellbrems-Signalgeber (1) ein Proportionalelement (128) zur Vorgabe eines Bremskraftwerts aufweist und die elektronische Steuereinrichtung (208) die Bremskraft der Feststellbrems-Funktion nach Maßgabe des Bremskraftwerts einstellt.

22. Bremsanlage nach wenigstens einem der vorhergehenden Ansprüche, jedoch ohne Rückbezug auf Anspruch 1, **dadurch gekennzeichnet, dass** ein Rollbrems-Signalgeber (60) zur Aktivierung einer Rollbrems-Funktion vorgesehen ist, und dass bei aktivierter Rollbrems-Funktion automatisch die Feststellbrems-Funktion aktivierbar ist, insbesondere wenn ein Defekt in der Bremsanlage auftritt.

23. Bremsanlage nach wenigstens einem der vorhergehenden Ansprüche, **dadurch gekennzeichnet, dass** das Feststellbrems-Modul (2) bzw. dessen elektronische Steuereinrichtung (208) einen Anschluss (201) für eine Datenschnittstelle aufweist, welcher zum Anschluss an ein in dem Fahrzeug vorgesehenes Datenbus-System geeignet ist, und dass die elektronische Steuereinrichtung (208) bei Empfang eines Aktivierungssignals über die Datenschnittstelle die Feststellbrems-Funktion aktiviert.

24. Bremsanlage nach wenigstens einem der vorhergehenden Ansprüche, **dadurch gekennzeichnet, dass** eine Deaktivierung der Feststellbrems-Funktion nur bei gleichzeitiger Betätigung des Bremspedals (4) zugelassen wird.

## Claims

1. Pressure-medium-operated brake system for a motor vehicle having a parking brake function, in which, as a result of manual actuation of an electrical parking brake signal transmitter (1), at least one wheel brake of the brake system is actuatable, without operation of a brake pedal, by way of an actuator to which a pressure medium can be supplied,
there being provided a parking brake module (2) in which an electronic control device (208) and a valve device (213, 221, 228) that is actuatable electrically by the electronic control device (208) are integrated,
the electronic control device (208) activating the parking brake function on receiving from the parking brake signal transmitter (1) an electrical actuating signal requesting activation of the parking brake function,
the electronic control device (208), within the context of the parking brake function, controlling the supply of pressure medium to the actuator by means of the electrically actuatable valve device (213, 221, 228),
**characterised in that** an anti-rollaway brake signal transmitter (60) is provided for activating an anti-rollaway brake function, and the electronic control device (208) contains a function for recognising the activation of the anti-rollaway brake function, the electronic control device (208) being arranged in such a way that, when the anti-rollaway brake function is activated, it activates the parking brake function if it detects in addition the occurrence of a fault in the brake system.

2. Pressure-medium-operated brake system for a motor vehicle having a parking brake function, in which, as a result of manual actuation of an electrical parking brake signal transmitter (1), at least one wheel brake of the brake system is actuatable, without operation of a brake pedal, by way of an actuator to which a pressure medium can be supplied,
there being provided a parking brake module (2) in which an electronic control device (208) and a valve device (213, 221, 228) that is actuatable electrically by the electronic control device (208) are integrated,
the electronic control device (208) activating the parking brake function on receiving from the parking brake signal transmitter (1) an electrical actuating signal requesting activation of the parking brake function,
the electronic control device (208), within the context of the parking brake function, controlling the supply of pressure medium to the actuator by means of the electrically actuatable valve device (213, 221, 228),
**characterised in that** the electrically actuatable valve device (213, 221, 228) comprises a bistable valve (213) having a bistable switching function with two switched states, wherein in a first switched state pressure medium can be fed to the actuator and in a second switched state pressure medium can be taken from the actuator,
a valve (221) being arranged in the pressure medium flow path between the bistable valve (213) and the actuator, by means of which valve (221) the flow of pressure medium between the bistable valve (213) and the actuator can be shut off.

3. Pressure-medium-operated brake system for a motor vehicle having a parking brake function, in which, as a result of manual actuation of an electrical parking brake signal transmitter (1), at least one wheel brake of the brake system is actuatable, without operation of a brake pedal, by way of an actuator to which a pressure medium can be supplied,
there being provided a parking brake module (2) in which an electronic control device (208) and a valve device (213, 221, 228) that is actuatable electrically by the electronic control device (208) are integrated,
the electronic control device (208) activating the parking brake function on receiving from the parking brake signal transmitter (1) an electrical actuating signal requesting activation of the parking brake function,
the electronic control device (208), within the context of the parking brake function, controlling the supply of pressure medium to the actuator by means of the electrically actuatable valve device (213, 221, 228),
**characterised in that** a stationary safety function is provided which, when the vehicle is stationary, automatically effects activation of the parking brake function if the supply pressure falls below the release pressure of the spring-loaded brake function.

4. Brake system according to at least one of the preceding claims, **characterised in that** the actuator is in the form of a spring-loaded brake cylinder (31, 41).

5. Brake system according to at least one of the preceding claims, **characterised in that**, on receipt of the electrical actuating signal requesting activation of the parking brake function, the supply of pressure medium to the actuator is reduced.

6. Brake system according to at least one of the preceding claims, **characterised in that** there is provided in or on the parking brake module (2) an electrical energy storage device (236) which serves to maintain the parking brake function at least partially in case of loss or disruption to the power supply on the vehicle side.

7. Brake system according to at least one of the preceding claims, but not dependent upon claim 2, **characterised in that** the electrically actuatable valve device (213, 221, 228) comprises a bistable valve (213) having a bistable switching function with two switched states, wherein in a first switched state pressure medium can be fed to the actuator and in a second switched state pressure medium can be taken from the actuator.

8. Brake system according to claim 7, **characterised in that** a valve (221) is arranged in the pressure medium flow path between the bistable valve (213) and the actuator, by means of which valve (221) the flow of pressure medium between the bistable valve (213) and the actuator can be shut off.

9. Brake system according to at least one of claims 7 and 8, **characterised in that** the bistable valve (213) is in the form of a 3/2-way valve that is actuatable by two electromagnets.

10. Brake system according to at least one of the preceding claims, **characterised in that** at least one manually actuated valve (218) is arranged between the pressure medium reservoir and the actuator, which manually actuated valve (218) enables pressure medium to be fed to or taken from the actuator manually.

11. Brake system according to claim 10, **characterised in that** the manually actuated valve is in the form of a 4/3-way valve.

12. Brake system according to at least one of the preceding claims, **characterised in that** a relay valve (224) is arranged between the valve (221) and the actuator.

13. Brake system according to at least one of the preceding claims, **characterised in that** a stationary safety valve (210) is arranged between the pressure medium reservoir and the actuator.

14. Brake system according to at least one of the preceding claims, **characterised in that** the parking brake module (2) is provided on the inlet and/or outlet side with shuttle valves (211, 230) which permit integration into a brake system which, for safety reasons, is of dual-circuit construction.

15. Brake system according to claim 14, **characterised in that** the shuttle valves (211, 230) are screwed directly into pressure medium connections of the parking brake module (2).

16. Brake system according to at least one of the preceding claims, **characterised in that** a trailer control valve (228) is provided for releasing the brakes of a trailer vehicle.

17. Brake system according to at least one of the preceding claims, but not dependent upon claim 3, **characterised in that** a stationary safety function is provided which, when the vehicle is stationary, automatically effects activation of the parking brake function if the supply pressure falls below the release pressure of the spring-loaded brake function.

18. Brake system according to at least one of the preceding claims, **characterised in that** the parking brake signal transmitter (1) has a neutral position, a parking brake position and a trailer control position.

19. Brake system according to claim 18, **characterised in that** the electronic control device (208) increments a brake force value for the duration of the actuation of the parking brake signal transmitter (1) into the parking brake position and adjusts the brake force of the parking brake function according to the brake force value.

20. Brake system according to claim 18 or 19, **characterised in that** brief actuation of the parking brake signal transmitter (1) into the parking brake position effects activation of the parking brake function with maximum brake force, provided that the parking brake function has not yet been activated and the vehicle is stationary.

21. Brake system according to at least one of the preceding claims, **characterised in that** the parking brake signal transmitter (1) comprises a proportional element (128) for specifying a brake force value, and the electronic control device (208) adjusts the brake force of the parking brake function according to the brake force value.

22. Brake system according to at least one of the preceding claims, but not dependent upon claim 1, **characterised in that** an anti-rollaway brake signal transmitter (60) is provided for activating an anti-rollaway brake function, and **in that**, when the anti-rollaway brake function is activated, the parking brake function can be activated automatically, especially if a fault occurs in the brake system.

23. Brake system according to at least one of the preceding claims, **characterised in that** the parking brake module (2), or the electronic control device (208) thereof, comprises a connection (201) for a data interface which is suitable for connection to a data bus system provided in the vehicle, and **in that** the electronic control device (208) activates the parking brake function on receiving an activating signal by way of the data interface.

24. Brake system according to at least one of the preceding claims, **characterised in that** deactivation of the parking brake function is permitted only if the brake pedal (4) is operated at the same time.

## Revendications

1. Système de freinage pour véhicule automobile, présentant une fonction de frein d'immobilisation, dans lequel, à la suite d'un actionnement manuel d'un émetteur de signal électrique (1) pour le frein d'immobilisation, au moins un frein de roue du système de freinage est susceptible d'être actionné via un actionneur capable d'être alimenté avec le milieu sous pression, sans actionnement d'une pédale de frein, où il est prévu un module de frein d'immobilisation (2) dans lequel sont intégrés un système de commande électronique (208) ainsi qu'une unité de valve (213, 221, 228) capable d'être actionnée par voie électrique depuis le système de commande électronique (208), ledit système de commande électronique (208) activant la fonction de frein d'immobilisation lors de la réception d'un signal d'actionnement électrique provenant de l'émetteur de signal pour frein d'immobilisation (1) et exigeant l'activation de la fonction de frein d'immobilisation, ledit système de commande électronique (208) commandant, dans le cadre de la fonction de frein d'immobilisation, l'alimentation de l'actionneur en milieu sous pression au moyen de l'unité de valve (213, 221, 228) à actionnement électrique, **caractérisé en ce qu'**il est prévu un émetteur de signal (60) de frein de roulement pour activer une fonction de frein de roulement et le système de commande électronique (208) activant contient une fonction pour reconnaître l'activation de la fonction de frein de roulement, où le système de commande électronique (208) est agencé de telle manière qu'il active la fonction de frein d'immobilisation lorsqu'il perçoit en outre la survenue d'un défaut dans le système de freinage quand la fonction de frein de roulement est activée.

2. Système de freinage pour véhicule automobile, présentant une fonction de frein d'immobilisation, dans lequel, à la suite d'un actionnement manuel d'un émetteur de signal électrique (1) pour le frein d'immobilisation, au moins un frein de roue du système de freinage est susceptible d'être actionné via un actionneur capable d'être alimenté avec le milieu sous pression, sans actionnement d'une pédale de frein, où il est prévu un module de frein d'immobilisation (2) dans lequel sont intégrés un système de commande électronique (208) ainsi qu'une unité de valve (213, 221, 228) capable d'être actionnée par voie électrique depuis le système de commande électronique (208), ledit système de commande électronique (208) activant la fonction de frein d'immobilisation lors de la réception d'un signal d'actionnement électrique provenant de l'émetteur de signal pour frein d'immobilisation (1) et exigeant l'activation de la fonction de frein d'immobilisation, ledit système de commande électronique (208) commandant, dans le cadre de la fonction de frein d'immobilisation, l'alimentation de l'actionneur en milieu sous pression au moyen de l'unité de valve (213, 221, 228) à actionnement électrique, **caractérisé en ce que** l'unité de valve (213, 221, 228) à actionnement électrique comprend une valve bistable (213) avec une fonction de commutation bistable présentant deux états de commutation, tels que dans un premier état de commutation le milieu sous pression est susceptible d'être amené à l'actionneur et dans un second état de commutation le milieu sous pression est susceptible d'être évacué de l'actionneur,
où dans le trajet d'écoulement du milieu sous pression entre la valve bistable (213) et l'actionneur, est agencée une valve (221) au moyen de laquelle l'écoulement du milieu sous pression entre la valve bistable (213) et l'actionneur peut être bloqué.

3. Système de freinage pour véhicule automobile, présentant une fonction de frein d'immobilisation, dans lequel, à la suite d'un actionnement manuel d'un émetteur de signal électrique (1) pour le frein d'immobilisation, au moins un frein de roue du système de freinage est susceptible d'être actionné via un actionneur capable d'être alimenté avec le milieu sous pression, sans actionnement d'une pédale de frein, où il est prévu un module de frein d'immobilisation (2) dans lequel sont intégrés un système de commande électronique (208) ainsi qu'une unité de valve (213, 221, 228) capable d'être actionnée par voie électrique depuis le système de commande électronique (208), ledit système de commande électronique (208) activant la fonction de frein d'immobilisation lors de la réception d'un signal d'actionnement électrique provenant de l'émetteur de signal pour frein d'immobilisation (1) et exigeant l'activation de la fonction de frein d'immobilisation, ledit système de commande électronique (208) commandant, dans le cadre de la fonction de frein d'immobilisation, l'alimentation de l'actionneur en milieu sous pression au moyen de l'unité de valve (213, 221, 228) à actionnement électrique, **caractérisé en ce qu'**il est prévu une fonction de sécurité d'arrêt qui provoque automatiquement une activation de la fonction de frein d'immobilisation lorsque le véhicule est immobilisé si la pression de réserve tombe au-dessous de la pression de déclenchement de la fonction de freinage par l'accumulateur à ressort.

4. Système de freinage selon au moins l'une des revendications précédentes, **caractérisé en ce que** l'actionneur est réalisé sous forme de cylindre de freinage (31, 41) avec accumulateur à ressort.

5. Système de freinage selon au moins l'une des revendications précédentes, **caractérisé en ce que**, lors de la réception du signal d'actionnement électrique exigeant l'activation de la fonction de frein d'immobilisation, l'alimentation de l'actionneur en milieu sous pression est réduite.

6. Système de freinage selon l'une au moins des revendications précédentes, **caractérisé en ce qu'**un accumulateur d'énergie électrique (236) est prévu dans ou sur le module de frein d'immobilisation (2), ledit accumulateur servant au maintien au moins partiel de la fonction de frein d'immobilisation lors d'une panne ou d'une perturbation de l'alimentation électrique côté véhicule.

7. Système de freinage selon l'une au moins des revendications précédentes, mais sans référence à la revendication 2, **caractérisé en ce que** l'unité de valve (213, 221, 228) à actionnement électrique comprend une valve bistable (213) avec une fonction de commutation bistable présentant deux états de commutation, tels que dans un premier état de commutation le milieu sous pression est susceptible d'être amené à l'actionneur et dans un second état de commutation le milieu sous pression est susceptible d'être évacué de l'actionneur.

8. Système de freinage selon la revendication 7, **caractérisé en ce que**, dans le trajet d'écoulement du milieu sous pression entre la valve bistable (213) et l'actionneur, est agencée une valve (221) au moyen de laquelle l'écoulement du milieu sous pression entre la valve bistable (213) et l'actionneur peut être bloqué.

9. Système de freinage selon l'une au moins des revendications 7 ou 8, **caractérisé en ce que** la valve bistable (213) est réalisée sous forme d'un distributeur à trois voies/deux positions susceptible d'être actionné par deux électroaimants.

10. Système de freinage selon l'une au moins des revendications précédentes, **caractérisé en ce qu'**au moins une valve à actionnement manuel (218) est agencée entre la réserve de milieu sous pression et l'actionneur, valve qui permet une admission manuelle du milieu sous pression vers l'actionneur ou une évacuation manuelle du milieu sous pression hors de celui-ci.

11. Système de freinage selon la revendication 10, **caractérisé en ce que** la valve à actionnement manuel est réalisée sous forme de distributeur à quatre voies/trois positions.

12. Système de freinage selon l'une au moins des revendications précédentes, **caractérisé en ce qu'**une valve relais (224) est agencée entre la valve (221) et l'actionneur.

13. Système de freinage selon l'une au moins des revendications précédentes, **caractérisé en ce qu'**une valve de sécurité d'arrêt (210) est agencée entre la réserve de milieu sous pression et l'actionneur.

14. Système de freinage selon l'une au moins des revendications précédentes, **caractérisé en ce que** le module de frein d'immobilisation (2) est doté à l'entrée et/ou à la sortie de valves d'inversion (211, 230) qui permettent une intégration dans une installation de freinage réalisée à deux circuits pour des raisons de sécurité.

15. Système de freinage selon la revendication 14, **caractérisé en ce que** les valves d'inversion (211, 230) sont vissées directement dans des raccords à milieu sous pression du module de frein d'immobilisation (2).

16. Système de freinage selon l'une au moins des revendications précédentes, **caractérisé en ce qu'**il est prévu une valve de commande de remorque (228) pour déclencher les freins d'un véhicule remorqué.

17. Système de freinage selon l'une au moins des revendications précédentes, mais sans référence à la revendication 3, **caractérisé en ce qu'**il est prévu une fonction de sécurité d'arrêt qui provoque automatiquement une activation de la fonction de frein d'immobilisation lorsque le véhicule est immobilisé si la pression de réserve tombe au-dessous de la pression de déclenchement de la fonction de freinage par l'accumulateur à ressort.

18. Système de freinage selon l'une au moins des revendications précédentes, **caractérisé en ce que** l'émetteur de signal (1) de frein d'immobilisation présente une position neutre, une position de freinage d'immobilisation et une position de contrôle de remorque.

19. Système de freinage selon la revendication 18, **caractérisé en ce que** le système de commande électronique (208) incrémente une valeur de force de freinage pendant la durée de l'actionnement de l'émetteur de signal (1) du frein d'immobilisation vers la position de freinage d'immobilisation, et établit la force de freinage de la fonction de frein d'immobilisation selon la mesure de la valeur de la force de freinage.

20. Système de freinage selon la revendication 18 ou 19, **caractérisé en ce qu'**un actionnement bref de l'émetteur de signal (1) de frein d'immobilisation dans la position de freinage d'immobilisation provoque une activation de la fonction de frein d'immobilisation avec une force de freinage maximum, dans la mesure où la fonction de frein d'immobilisation n'a pas encore été activée et que le véhicule se trouve à l'arrêt.

21. Système de freinage selon l'une au moins des revendications précédentes, **caractérisé en ce que** l'émetteur de signal (1) de frein d'immobilisation comprend un élément proportionnel (128) pour imposer une valeur de force de freinage, et le système de commande électronique (208) établit la force de freinage de la fonction de frein d'immobilisation selon la mesure de la valeur de la force de freinage.

22. Système de freinage selon l'une au moins des revendications précédentes, mais sans référence à la revendication 1, **caractérisé en ce qu'**il est prévu un émetteur de signal (60) de frein de roulement pour activer une fonction de frein de roulement, et **en ce que** la fonction de frein d'immobilisation est susceptible d'être activée automatiquement lorsque la fonction de frein de roulement est activée, en particulier lorsqu'un défaut se produit dans le système de freinage.

23. Système de freinage selon l'une au moins des revendications précédentes, **caractérisé en ce que** le module de frein d'immobilisation (2), ou respectivement son système de commande électronique (208), comporte un raccord (201) pour une interface de données qui convient au raccordement à un système de bus de données prévu dans le véhicule, et **en ce que** le système de commande électronique (208) active la fonction de frein d'immobilisation lors de la réception d'un signal d'activation via l'interface de données.

24. Système de freinage selon l'une au moins des revendications précédentes, **caractérisé en ce qu'**une désactivation de la fonction de frein d'immobilisation n'est autorisée que lors d'un actionnement simultané de la pédale de frein (4).
